# EUROPEAN PATENT SPECIFICATION

(11) **EP 3 741 988 B1**
(45) Date of publication and mention of the grant of the patent: **15.03.2023**
(21) Application number: 18901609.0
(22) Date of filing: 17.01.2018
(51) Int. Cl.: F02M 35/10, F02M 35/024, F02M 35/16

(54) **AIR CLEANER**
LUFTREINIGER
ÉPURATEUR D'AIR

(43) Date of publication of application: 25.11.2020
(73) Proprietor: HONDA MOTOR CO., LTD., Minato-ku Tokyo 107-8556 (JP)
(72) Inventor: SHIMIZU, Takahiko, Wako-shi, Saitama 351-0193 (JP); SHIMMURA, Hiroyuki, Wako-shi, Saitama 351-0193 (JP); AIHARA, Junji, Wako-shi, Saitama 351-0193 (JP); IWAMOTO, Tetsunori, Wako-shi, Saitama 351-0193 (JP)
(74) Representative: Kiwit, Benedikt
(86) International application number: PCT/JP2018/001279
(87) International publication number: WO 2019/142280

(56) References cited:
- WO-A1-03/106834
- WO-A1-03/106834
- JP-A- 2004 217 156
- JP-A- 2004 217 156
- JP-A- 2005 139 999
- JP-A- 2012 077 708
- JP-U- S63 196 469
- US-A- 4 778 029

## Description

### TECHNICAL FIELD

The present invention relates to an air cleaner for supplying outside air to an internal combustion engine, and in particular to an air cleaner that includes a cleaner container that forms a dirty chamber communicating with outside air and a clean chamber communicating with an internal combustion engine, which is a supply destination for cleaned air, a cleaner element that is disposed within the cleaner container between the dirty chamber and the clean chamber, and an intake duct that is fixed to the cleaner container and provides communication between a space outside the cleaner container and the dirty chamber.

### BACKGROUND ART

Patent Document 1 discloses an intake duct that guides air to a carburetor in a two-wheeled motor vehicle. The intake duct includes a tubular part connected to the carburetor, a chamber part provided on the intake upstream side of the tubular part and having an internal diameter larger than that of the tubular part, and an extending inner wall part protruding into an interior space of the chamber part while being continuous from the tubular part and forming an extended flow path communicating with a flow path of the tubular part. Due to the flow path of the tubular part being extended, turbulence of the flow of air introduced from the tubular part is suppressed, thus realizing flow alignment for the flow of air.

### RELATED ART DOCUMENTS

### PATENT DOCUMENTS

Patent Document 1: Japanese Patent Application Laid-open No. 2011-43165
JP 2004 217156 A discloses an air cleaner that feeds air to a forward tilting cylinder of the engine via a vaporizer.

### SUMMARY OF THE INVENTION

### PROBLEMS TO BE SOLVED BY THE INVENTION

However, in the arrangement of Patent Document 1, extra space is required for extending the intake path, the structure also becomes complicated, and there is a desire for a technique that will realize flow alignment effectively in a small space.

The present invention has been accomplished in light of the above circumstances, and it is an object thereof to provide an air cleaner that realizes flow alignment effectively in a small space.

### MEANS FOR SOLVING THE PROBLEMS

According to a first aspect of the present invention, there is provided an air cleaner for supplying outside air to an internal combustion engine, comprising a cleaner container that forms a dirty chamber communicating with outside air and a clean chamber communicating with a connecting tube that leads to the internal combustion engine, which is a supply destination for cleaned air, a cleaner element that is disposed within the cleaner container between the dirty chamber and the clean chamber, and an intake duct that is fixed to the cleaner container and provides communication between a space outside the cleaner container and the dirty chamber, characterized in that provided at an upstream end of the intake duct is a double pipe part that is provided along an outer periphery of the intake duct and is at least partially integrated with the cleaner container, and an extremity part, on the upstream end side of the intake duct, of the double pipe part is a free end, and the double pipe part and the intake duct oppose each other only across an empty space therebetween, and in that an interior member linked to the connecting tube is provided in the clean chamber and another double pipe part is provided at an upstream end of the interior member.

According to a second aspect of the present invention, in addition to the first aspect, the cleaner container comprises a wall body that faces at least part of the dirty chamber so as to be continuous from an outer wall face of the intake duct and spread outward, and supports the intake duct, and an outer ring portion that extends from the wall body toward the upstream end of the intake duct along the outer wall face of the intake duct while maintaining an interval between the outer ring portion and the outer wall face, and forms the double pipe part.

According to a third aspect of the present invention, in addition to the first or second aspect, the cleaner container at least partially forms a pipe wall of the intake duct.

According to a fourth aspect of the present invention, in addition to any one of the first to third aspects, the upstream end of the intake duct is formed from a tube body having a flat region at least partially in a peripheral direction thereof, and the double pipe part has an outer ring portion that spreads along an outer wall face of the flat region so as to be continuous from an outer wall face of the cleaner container while maintaining an interval between the outer ring portion and the outer wall face of the flat region outside the tube body.

According to a fifth aspect of the present invention, in addition to any one of the first to fourth aspects, the intake duct extends linearly along the outer wall of the cleaner container, the upstream end of the intake duct opens in a recess part that is recessed from the outer wall of the cleaner container, the double pipe part is housed in the recess part, and a duct cover is mounted on the cleaner container, the duct cover blocking the recess part at a position facing the upstream end of the intake duct.

According to a sixth aspect, which is not covered by the claimed invention, there is provided an air cleaner for supplying outside air to an internal combustion engine, comprising a cleaner container that forms a dirty chamber communicating with outside air and a clean chamber communicating with the internal combustion engine, which is a supply destination for cleaned air, a cleaner element that is disposed within the cleaner container between the dirty chamber and the clean chamber, and an intake duct that is fixed to the cleaner container and provides communication between a space outside the cleaner container and the dirty chamber, characterized in that formed at an upstream end of the intake duct is a double pipe part that is provided along an outer periphery of the intake duct and is biased toward a direction going away from an outer wall of the cleaner container to thus form a gap between the outer wall and the intake duct.

According to a seventh aspect, in addition to the sixth aspect, formed in the outer wall of the cleaner container is a clearance part that is recessed inward and faces the intake duct with the gap therebetween.

According to an eighth aspect of the present invention, in addition to the sixth or seventh aspect, a virtual plane including the upstream end of the intake duct is inclined so as to be displaced toward an upstream side thereof in going away from the outer wall of the cleaner container.

According to a ninth aspect, in addition to any one of the sixth to eighth aspects, the cleaner container has a support wall that is continuous from the outer wall of the cleaner container and supports the intake duct.

According to a tenth aspect, in addition to the ninth aspect, the support wall is inclined so as to be displaced toward a downstream side of the intake duct in going away from the outer wall of the cleaner container.

According to an eleventh aspect of the present invention, there is provided an air cleaner for supplying outside air to an internal combustion engine, comprising a cleaner container that forms a dirty chamber communicating with outside air and a clean chamber communicating with a connecting tube that leads to the internal combustion engine, which is a supply destination for cleaned air, a cleaner element that is disposed within the cleaner container between the dirty chamber and the clean chamber, and an intake duct that is fixed to the cleaner container and provides communication between the dirty chamber and an outside air space, characterized in that the air cleaner comprises a support wall that is continuous from an outer wall face of the intake duct, spreads outward, and is fixed to the cleaner container, and a double pipe part that is continuous from the support wall and surrounds an upstream end of the intake duct along an outer periphery of the intake duct, and an interior member linked to the connecting tube is provided in the clean chamber and another double pipe part is provided at an upstream end of the interior member.

According to a twelfth aspect, in addition to the eleventh aspect, the cleaner container comprises a first fixed wall that is superimposed on the support wall from an upstream side of the intake duct and has a first support hole corresponding to the double pipe part, and a second fixed wall that is superimposed on the support wall from a downstream side of the intake duct and has a second support hole corresponding to the outer periphery of the intake duct.

According to a thirteenth aspect, in addition to the twelfth aspect, the air cleaner comprises a retaining rib that is formed on the cleaner container between the first fixed wall and the second fixed wall and protrudes toward the support wall, and a groove that is formed in an outer peripheral face of the support wall and receives the retaining rib.

According to a fourteenth aspect of the present invention, in addition to any one of the eleventh to thirteenth aspects, a distance between an outer wall face of the intake duct and the double pipe part is set to be 10% to 30% of a distance of an inner wall of the intake duct.

According to a fifteenth aspect of the present invention, in addition to any one the eleventh to fourteenth aspects, an upstream end of the double pipe part is in contact with a virtual plane on which the upstream end of the intake duct lies, or the double pipe part intersects the virtual plane. According to a sixteenth aspect of the present invention, which is not covered by the claimed invention, there is provided an air cleaner for supplying outside air to an internal combustion engine, comprising a cleaner container that forms a dirty chamber communicating with outside air and a clean chamber communicating with the internal combustion engine, which is a supply destination for cleaned air, a cleaner element that is disposed within the cleaner container between the dirty chamber and the clean chamber, and an intake duct that is fixed to the cleaner container and provides communication between a space outside the cleaner container and the dirty chamber, characterized in that provided at an upstream end of the intake duct is a double pipe part that is provided along an outer periphery of the intake duct and is at least partially integrated with the cleaner container, and the double pipe part has an outer ring portion that spreads outward from an outer wall face of the intake duct and forms the double pipe part extending toward the upstream end of the intake duct along the outer wall face, and a flange portion that supports the outer ring portion.

### EFFECTS OF THE INVENTION

In accordance with the first aspect, due to the double pipe part being provided at the upstream end of the intake duct the flow rate within the intake duct is made uniform, and the air intake efficiency improves. It is unnecessary to extend the intake duct, and flow alignment of the flow of air within the intake duct is realized effectively in a small space. Since the double pipe part is at least partially integrated with the cleaner container, the number of components can be decreased.

In accordance with the second aspect, since the flange portion, which spreads outward from the outer wall face of the intake duct and supports the outer ring portion with respect to the intake duct, is formed from the wall body of the cleaner container, it is possible to realize flow alignment of the flow of air within the intake duct by a simple arrangement and decrease the number of components.

In accordance with the third aspect, since the container wall of the cleaner container also functions as the pipe wall of the intake duct, it is possible to dispose the intake duct within the cleaner container with high space efficiency, thus further decreasing the number of components.

In accordance with the fourth aspect, compared with an intake duct with a simple cylindrical shape, the cross-sectional area of the intake duct can be increased by the action of the flat region, and the amount of air intake can be increased. Furthermore, since the outer ring portion of the double pipe part spreads so as to be continuous from the outer wall face of the cleaner container, protrusion of the outer ring portion can be minimized.

In accordance with the fifth aspect, since the intake duct is formed linearly along the outer wall of the cleaner container, when molding the intake duct release from a mold can be carried out well, and ease of production can be realized. The duct cover can prevent the linear entry of dirt into the opening of the intake duct, thus suppressing the entry of dirt toward the dirty chamber.

In accordance with the sixth aspect, due to the double pipe part being biased toward a direction going away from the outer wall of the cleaner container, the gap formed between the outer wall of the cleaner container and the intake duct can function as the double pipe part, the flow rate within the intake duct is made uniform, and the air intake efficiency improves. It is unnecessary to extend the intake duct, and flow alignment of the flow of air within the intake duct is realized effectively in a small space. In particular, since the intake duct can be as close to the outer wall of the cleaner container as possible, the intake duct can be disposed outside the cleaner container with high space efficiency.

In accordance with the seventh aspect, since the upstream end of the intake duct is biased toward the interior of the cleaner container, protrusion of the double pipe part can be minimized.

In accordance with the eighth aspect, since the upstream end of the intake duct is directed toward the interior of the cleaner container, air easily flows in between the intake duct and the outer wall of the cleaner container, the double pipe part can function effectively, and protrusion of the double pipe part can be minimized.

In accordance with the ninth aspect, since the outer wall of the cleaner container and the support wall form the recess part in the outer face of the cleaner container, the double pipe part can be housed in the recess part. In this way protrusion of the double pipe part can be avoided.

In accordance with the tenth aspect, due to the support wall being disposed so as to be inclined, the recess part formed by the outer wall and the support wall of the cleaner container does not become unnecessarily deep, and the volume of the interior of the cleaner container can be increased as far as possible.

In accordance with the eleventh aspect, due to the double pipe part being provided at the upstream end of the intake duct the flow rate within the intake duct is made uniform, and the air intake efficiency improves. It is unnecessary to extend the intake duct, and flow alignment of the flow of air within the intake duct is realized effectively in a small space. Since the support wall functions also as the flange portion of the double pipe part, the double pipe part can be fixed strongly to the support wall, and the number of components can be decreased.

In accordance with the twelfth aspect, since the support wall of the intake duct is fixed by means of the first fixed wall and the second fixed wall of the cleaner container, the intake duct can be strongly held by the cleaner container. The intake duct can be positioned well with respect to the cleaner container.

In accordance with the thirteenth aspect, the intake duct can be strongly held by the cleaner container, and vibration of the support wall is suppressed in response to the retaining rib being pressed into the receiving groove. In this way, the intake duct can be prevented from generating noise.

In accordance with the fourteenth aspect, due to the distance between the outer wall face of the intake duct and the double pipe part being appropriately set with respect to the magnitude of the flow path for the flow of air, flow alignment of the flow of air within the intake duct is reliably realized.

In accordance with the fifteenth aspect, since the double pipe part surrounds the upstream end of the intake duct, flow alignment of the flow of air within the intake duct is reliably realized.

### BRIEF DESCRIPTION OF DRAWINGS

[FIG. 1] FIG. 1 is a side view schematically showing an overall picture of a saddle-ridden vehicle (two-wheeled motor vehicle) related to one embodiment of the present invention.
[FIG. 2] FIG. 2 is an enlarged plan view of an air cleaner related to a first embodiment.
[FIG. 3] FIG. 3 is an enlarged sectional view of the air cleaner when observed in a horizontal cross section.
[FIG. 4] FIG. 4 is an enlarged perspective view schematically showing the upstream end of an intake duct.
[FIG. 5] FIG. 5 is an enlarged side view of a connecting tube disposed within a clean chamber.
[FIG. 6] FIG. 6 is an enlarged sectional view of the connecting tube.
[FIG. 7] FIG. 7 is (a) an enlarged front view and (b) an enlarged sectional view schematically showing the upstream end of the connecting tube and a double pipe part.
[FIG. 8] FIG. 8 is an enlarged plan view of an air cleaner related to a second embodiment.
[FIG. 9] FIG. 9 is an enlarged side view of the air cleaner when observed from the same direction as in FIG. 1.
[FIG. 10] FIG. 10 is an enlarged sectional view along line 10-10 in FIG. 9 when observed in a horizontal cross section.
[FIG. 11] FIG. 11 is (a) an enlarged front view and (b) an enlarged sectional view schematically showing the upstream end of an intake duct and a double pipe part.
[FIG. 12] FIG. 12 is (a) an enlarged front view and (b) an enlarged sectional view schematically showing the upstream end of a connecting tube and a double pipe part.
[FIG. 13] FIG. 13 is an enlarged plan view of an air cleaner related to a third embodiment.
[FIG. 14] FIG. 14 is an enlarged side view of the air cleaner when observed from the same direction as in FIG. 1.
[FIG. 15] FIG. 15 is an enlarged sectional view along line 15-15 in FIG. 14 when observed in a horizontal cross section.
[FIG. 16] FIG. 16 is (a) an enlarged front view and (b) an enlarged sectional view schematically showing the upstream end of an intake duct and a double pipe part.
[FIG. 17] FIG. 17 is an enlarged vertical sectional view of a main part of FIG. 15.
[FIG. 18] FIG. 18 is (a) an enlarged perspective view of a connecting tube, and (b) an enlarged front view and (c) an enlarged sectional view schematically showing the upstream end of the connecting tube and a double pipe part.
[FIG. 19] FIG. 19 is a flow rate distribution diagram showing the flow rate of air within an intake duct, a dirty chamber and a clean chamber related to (a) an air cleaner equipped with an intake duct having a double pipe part and (b) an air cleaner equipped with an intake duct having no double pipe part.

### EXPLANATION OF REFERENCE NUMERALS AND SYMBOLS

39 Air cleaner
45 Cleaner container
46 Intake duct
48 Cleaner element
51a Dirty chamber
51b Clean chamber
52 Double pipe part
53 Wall body
54 Outer ring portion
55 Outer wall (of cleaner container) as pipe wall
56 Recess part
57 Duct cover
58a Flat region
71 Air cleaner
72 Cleaner container
72 Cleaner container
73 Intake duct
78a Dirty chamber
78b Clean chamber
81 Outer wall (of cleaner container)
82 Support wall
88 Gap
89 Double pipe part
91 Clearance part
101 Air cleaner
102 Cleaner container
103 Intake duct
105 Support wall (vertical wall)
108 Cleaner element
111a Dirty chamber
111b Clean chamber
112 Double pipe part
113 First fixed wall
113a First support hole
114 Second fixed wall
114a Second support hole
115 Retaining rib
116 Groove
DF Distance (between intake duct and double pipe part)
DP Distance (of inner wall of intake duct)
PL Virtual plane (including upstream end)

### MODES FOR CARRYING OUT THE INVENTION

One embodiment of the present invention is explained below by reference to the attached drawings. In the explanation below, the fore-and-aft, up-and-down, and left-and-right directions are directions as viewed by a person riding a two-wheeled motor vehicle.

### (1) Air cleaner related to first embodiment

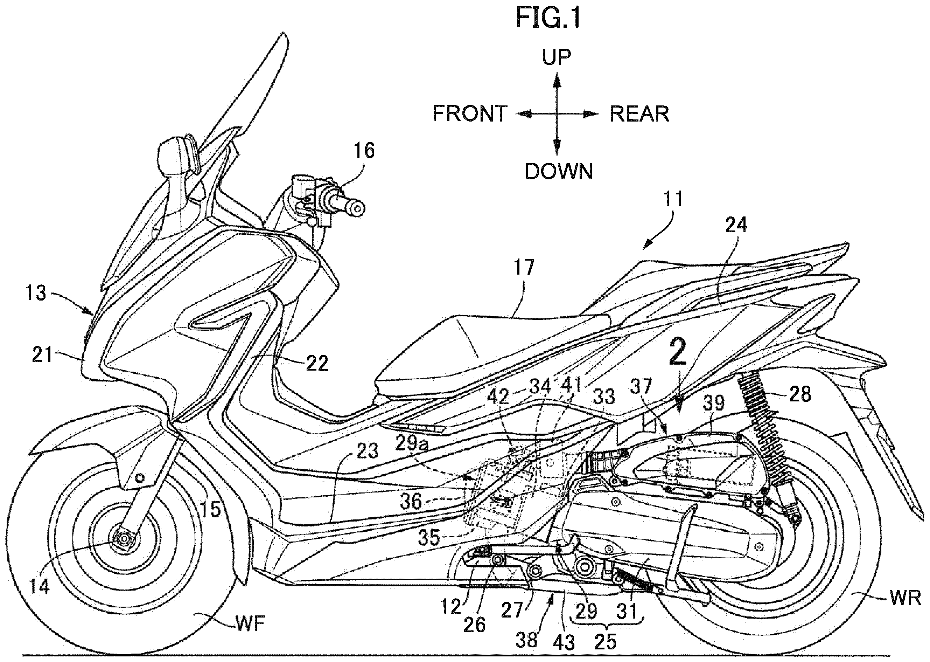

FIG. 1 schematically shows a scooter type two-wheeled motor vehicle related to one embodiment of a saddle-ridden vehicle. The two-wheeled motor vehicle 11 includes a vehicle body frame 12 and a vehicle body cover 13 fitted on the vehicle body frame 12. Steerably supported on a head pipe of the vehicle body frame 12 are rod-shaped handlebars 16 and a front fork 15 supporting a front wheel WF so that it can rotate around an axle 14.

A rider's seat 17 is mounted on the vehicle body cover 13 above a rear frame. The vehicle body cover 13 includes a front cover 21 that covers the head pipe from the front, a leg shield 22 that is continuous from the front cover 21, a step floor 23 that is continuous from the lower end of the leg shield 22 and is disposed above a main frame between the rider's seat 17 and the front wheel WF, and a rear cover 24 that supports the rider's seat 17 above the rear frame.

A unit-swing type drive unit 25 is disposed in a space beneath the rear cover 24. The drive unit 25 is linked via a link 27 to a bracket 26 joined to the front end of the rear frame so that it can swing vertically. A rear wheel WR is supported at the rear end of the drive unit 25 so that it can rotate around a horizontal axis. A rear cushion unit 28 is disposed between the rear frame and the drive unit 25 at a position spaced from the link 27 and the bracket 26. The drive unit 25 includes an air cooled single cylinder engine 29 and a transmission case 31 that is joined to an engine main body 29a of the engine 29 and houses a transmission device transmitting the output of the engine 29 to the rear wheel WR.

The engine main body 29a of the engine 29 includes a crankcase 33 that supports a crankshaft so that it can rotate around a rotational axis, a cylinder block 34 that is joined to the crankcase 33, a cylinder head 35 that is joined to the cylinder block 34, and a head cover 36 that is joined to the cylinder head 35. A cylinder is formed in the cylinder block, the cylinder guiding back and forth linear movement of a piston. A combustion chamber is formed between the piston and the cylinder head 35. An intake stroke, compression stroke, combustion stroke, and exhaust stroke of the engine 29 are repeated in association with back and forth linear movement of the piston.

Joined to the cylinder head 35 are an intake device 37 that is connected to an intake path communicating with the combustion chamber, and an exhaust device 38 that is connected to an exhaust path communicating with the combustion chamber. The intake device 37 includes an air cleaner 39 supported on the transmission case 31, and a throttle body 41 disposed between the air cleaner 39 and the cylinder head 35. In the throttle body 41 the flow rate of cleaned air supplied from the air cleaner 39 is adjusted by the action of a throttle. A fuel injection valve 42 is mounted on an upper side wall of the cylinder head 35. An air-fuel mixture is formed by fuel being injected into the cleaned air from the fuel injection valve 42. The air-fuel mixture is introduced into the combustion chamber via the action of an intake valve. The exhaust device 38 includes an exhaust pipe 43 that extends rearward from a lower side wall of the cylinder head 35 while passing beneath the engine main body 29a, and an exhaust muffler (not illustrated) that is connected to the downstream end of the exhaust pipe 43 and linked to the crankcase 33. Air after combustion is discharged from the combustion chamber via the action of an exhaust valve.

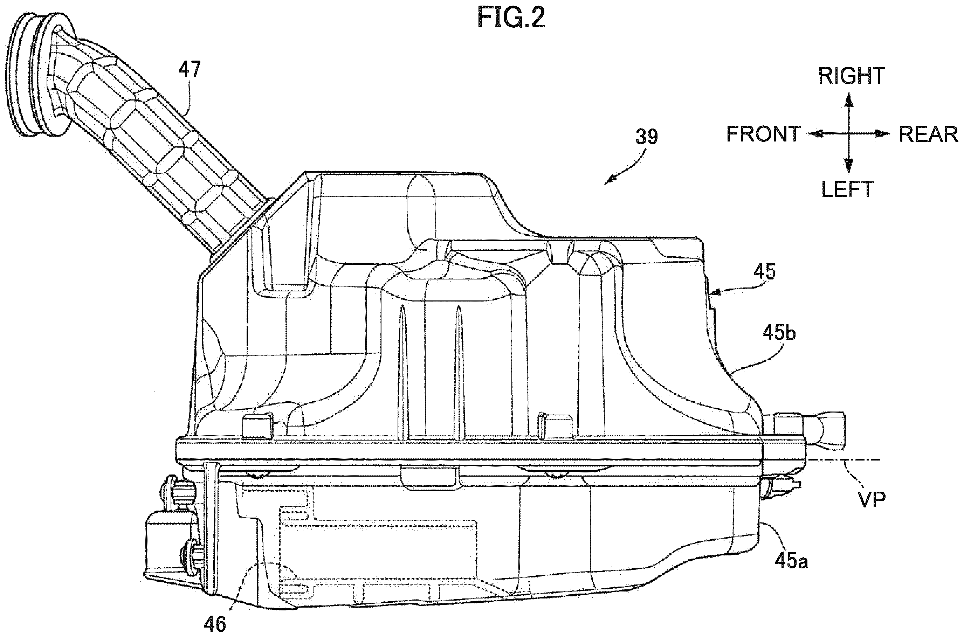

FIG. 2 schematically shows the air cleaner 39 related to the first embodiment. The air cleaner 39 includes a cleaner container 45 that has a first container body 45a and a second container body 45b joined to each other via mating faces along a vertical plane VP parallel to a virtual plane orthogonal to the rotational axis of the crankshaft and that forms an interior space communicating with outside air and a supply destination (engine 29) for cleaned air, an intake duct 46 that is integrated with the first container body 45a, opens outside the cleaner container 45 via the upstream end exposed to the outside air, and provides communication between the interior space of the cleaner container 45 and the outside air space, and a connecting tube 47 that is fixed to the second container body 45b, opens in the interior space of the cleaner container 45 via the upstream end positioned in the interior space of the cleaner container 45, and is linked to the throttle body 41 via the downstream end outside the cleaner container 45. The first container body 45a and the second container body 45b are molded from for example a resin material.

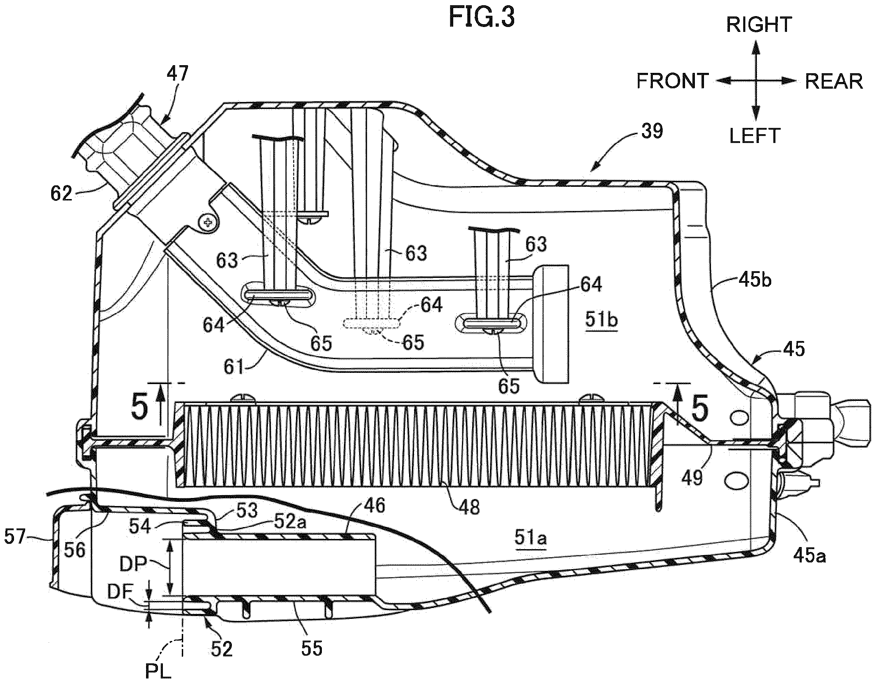

As shown in FIG. 3, a partition wall 49 retaining a cleaner element 48 is sandwiched between the first container body 45a and the second container body 45b. The partition wall 49 forms between itself and the first container body 45a a dirty chamber 51a communicating with the outside air space through the intake duct 46 and forms between itself and the second container body 45b a clean chamber 51b communicating with the throttle body 41 via the connecting tube 47. In this way, the interior space of the cleaner container 45 is partitioned into the dirty chamber 51a and the clean chamber 51b. The cleaner element 48 is disposed between the dirty chamber 51a and the clean chamber 51b. The outside air is cleaned while passing through the cleaner element 48 and is introduced into the clean chamber 5 1b. The downstream end of the intake duct 46 opens at a position facing the cleaner element 48.

A double pipe part 52 is provided at the upstream end of the intake duct 46, the double pipe part 52 surrounding the intake duct 46 along the outer periphery of the intake duct 46 and being at least partially integrated with the cleaner container 45. When integrating the double pipe part 52, the cleaner container 45 includes a wall body 53 that spreads outward while being continuous from an outer wall face of the intake duct 46, faces at least part of the dirty chamber 51a, and supports the intake duct 46, and an outer ring portion 54 that forms the double pipe part 52 by extending from the wall body 53 toward the upstream end of the intake duct 46 along the outer wall face of the intake duct 46 while maintaining an interval between itself and the outer wall face of the intake duct 46. The wall body 53 of the cleaner container 45 forms a flange portion 52a that spreads outward from the outer wall face of the intake duct 46 and supports the outer ring portion 54 with respect to the intake duct 46. The outer wall 55 of the cleaner container 45 partially forms a pipe wall of the intake duct 46. As is clear from FIG. 3, the double pipe part 52 of the intake duct 46 is disposed inside the outer edge of the cleaner container 45 when observed in plan view from infinitely far above.

Here, the upstream end of the outer ring portion 54 makes contact with a virtual plane PL including the upstream end of the intake duct 46. However, the upstream end of the outer ring portion 54 may extend further forward than the virtual plane PL including the upstream end of the intake duct 46 and the outer ring portion 54 may intersect the virtual plane PL. The double pipe part 52 is molded integrally with the first container body 45a. The intake duct 46 is continuous from a wall face of the dirty chamber 51a.

A distance DF between the outer wall face of the intake duct 46 and the double pipe part 52 is set so as to be 10% to 30% of a distance DP of the inner wall of the intake duct 46. Here, since the upstream end of the intake duct 46 and the outer ring portion 54 are formed into a tube shape having a coaxial oval cross section, the distance DF corresponds to the difference in the radial direction between the outer wall face of the intake duct 46 and the outer ring portion 54, and the distance DP corresponds to the minimum internal diameter of the intake duct 46.

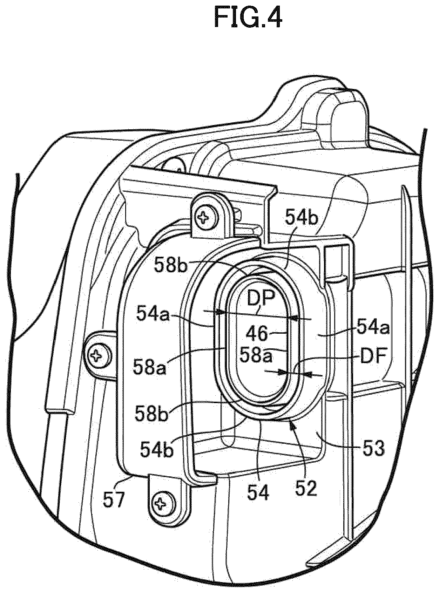

The intake duct 46 extends linearly along the outer wall 55 of the cleaner container 45, and the upstream end of the intake duct 46 opens in a recess part 56 that is recessed from the outer wall 55 of the cleaner container 45. The double pipe part 52 of the intake duct 46 is housed in the recess part 56. A duct cover 57 is mounted on the cleaner container 45, the duct cover 57 blocking the recess part 56 at a position facing the upstream end of the intake duct 46. As shown in FIG. 4, the duct cover 57 is continuous from an inner wall of the recess part 56 and forms a space housing the double pipe part 52 between itself and the outer face of the cleaner container 45.

As shown in FIG. 4, the upstream end of the intake duct 46 is formed from a tube body having a flat region 58a at least partially in the peripheral direction. Here, the intake duct 46 has a pair of flat regions 58a that face each other and spread in parallel to a vertical plane. The flat regions 58a are linked in the peripheral direction via a curved region 58b. In the outer ring portion 54 of the double pipe part 52, a flat-plate outer ring portion 54a and a curved outer ring portion 54b are continuous outside the tube body, the flat-plate outer ring portion 54a spreading along the outer wall face of the flat region 58a so as to be continuous from the outer wall face of the cleaner container 45 while maintaining a uniform interval between itself and the outer wall face of the flat region 58a, and the curved outer ring portion 54b spreading along the outer wall face of the curved region 58b so as to be continuous from the outer wall face of the cleaner container 45 while maintaining a uniform interval between itself and the outer wall face of the curved region 58b.

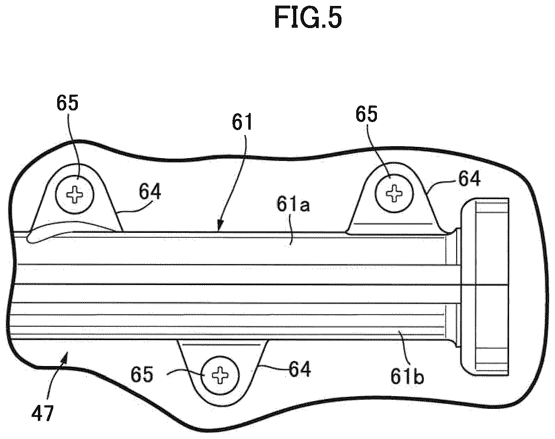

As shown in FIG. 3, the connecting tube 47 has an interior member 61 that is disposed within the clean chamber 51b and is molded from a hard resin material, and a linking member 62 that links the cleaner container 45 and the throttle body 41, extends through a wall of the second container body 45b, faces the interior of the clean chamber 51b via the upstream end, and is directly linked to the interior member 61. The linking member 62 is molded from an elastic body such as a rubber material. The interior member 61 has a tab 64 that is superimposed on the extremity of each of a plurality of bosses 63 rising perpendicularly from an inner wall of the clean chamber 51b. Due to the tab 64 being held on the extremity of the boss 63 by means of a screw 65 the interior member 61 is supported in a floating state within the clean chamber 51b. As shown in FIG. 5, three screws 65 have screw axes that extend in parallel with each other, and the screw axes and the connecting tube 47 do not intersect. Here, the interior member 61 is formed from an upper member 61a and a lower member 61b formed from semi-cylindrical bodies that are superimposed on one another. The upper member 61a and the lower member 61b are hermetically joined to each other by means of for example melt-bonding. The tab 64 is formed integrally with each of the upper member 61a and the lower member 61b.

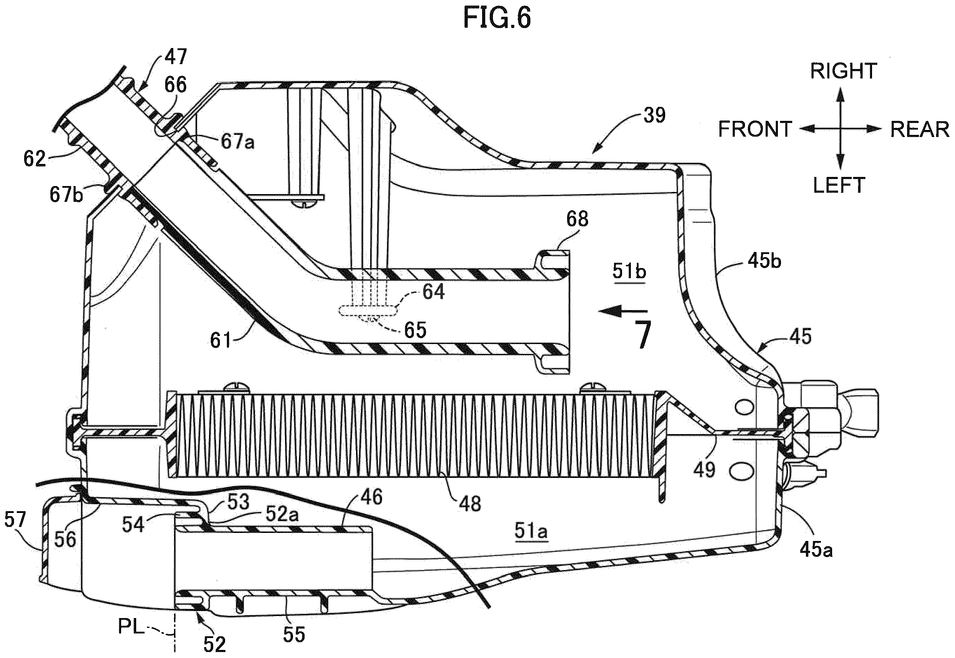

As shown in FIG. 6, the linking member 62 has a first annular body 67a that makes contact with an inner wall face of the second container body 45b from the inside of the second container body 45b when it is inserted into an insertion opening 66 of the second container body 45b, and a second annular body 67b that faces the first annular body 67a in the axial direction and is in contact with an outer wall face of the second container body 45b from the outside of the second container body 45b. The first annular body 67a is in intimate contact with the inner wall face of the second container body 45b via a vertical plane orthogonal to the axis of the insertion opening 66. The second annular body 67b is in intimate contact with the outer wall face of the second container body 45b via a vertical plane orthogonal to the axis of the insertion opening 66. In this way a wall body of the second container body 45b is sandwiched between the first annular body 67a and the second annular body 67b. The external diameter of the first annular body 67a is of a size that allows the entire first annular body 67a to enter the insertion opening 66 in response to deformation of the first annular body 67a when the linking member 62 is inserted into the insertion opening 66 via the upstream end. The external diameter of the second annular body 67b is larger than that of the first annular body 67a and is of a size such that it that remains outside the insertion opening 66 even when the first annular body 67a is deformed at the time of entering the insertion opening 66. The first annular body 67a has a tapered face that gradually increases in diameter from the upstream side and is continuous with the vertical plane via the largest diameter. The interior member 61 is inserted into the upstream end of the linking member 62. The internal diameter of the connecting tube 47 is maintained constant from the interior member 61 throughout the linking member 62.

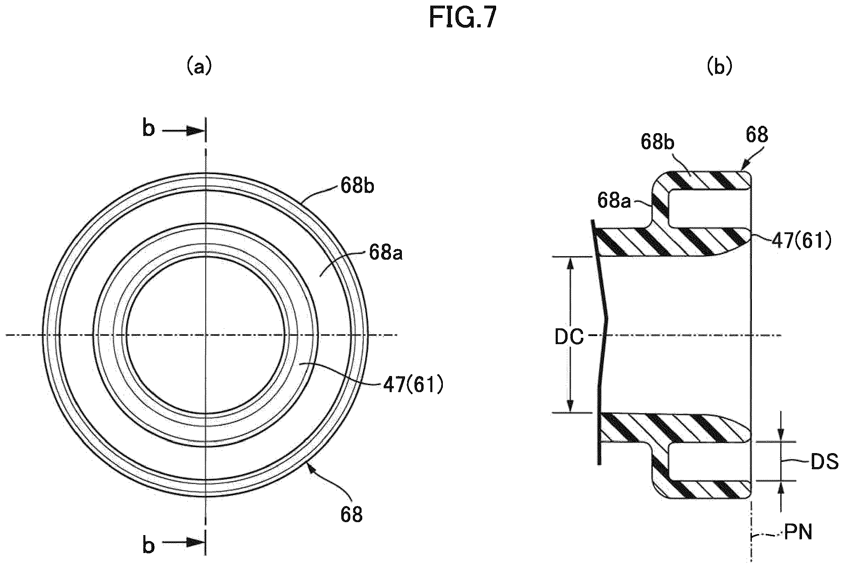

A double pipe part 68 is provided at the upstream end of the connecting tube 47 along the outer periphery of the connecting tube 47. As shown in FIG. 7, the double pipe part 68 has a flange portion 68a that spreads outward from the outer wall face of the connecting tube 47, and an outer ring portion 68b that extends toward the upstream end of the connecting tube 47 along an outer wall face of the flange portion 68a while maintaining an interval between itself and the outer wall face. The outer ring portion 68b is formed from a cylindrical body that is coaxial with a cylindrical body forming the upstream end of the connecting tube 47 and has a larger diameter than that of the cylindrical body. However, the outer ring portion 68b is not necessarily a cylindrical body and may be another cross-sectional shape such as a polygon. Furthermore, the upstream end of the connecting tube 47 and the outer ring portion 68b are not necessarily coaxial and may be eccentric. A rib, other than the flange portion 68a, that links the outer ring portion 68b to the outer wall face of the connecting tube 47 may be formed on the outer ring portion 68b. The flange portion 68a may be omitted, and the outer ring portion 68b may be fixed to the outer wall face of the connecting tube 47 by means of a plurality of ribs separated in the peripheral direction. Here, the upstream end of the outer ring portion 68b is in contact with a virtual plane PN including the upstream end of the connecting tube 47. However, the upstream end of the outer ring portion 68b may extend further forward than the virtual plane PN including the upstream end of the connecting tube 47 and the outer ring portion 68b may intersect the virtual plane PN.

A distance DS between the outer wall face of the connecting tube 47 and the double pipe part 68 is set to be 10% to 30% of a distance DC of an inner wall of the connecting tube 47. Here, since the upstream end of the connecting tube 47 and the outer ring portion 68b are formed into coaxial cylindrical shapes, the distance DS corresponds to the difference in the radial direction between the outer wall face of the connecting tube 47 and the outer ring portion 68b, and the distance DC corresponds to the internal diameter of the connecting tube 47. As shown in FIG. 6, a gap is formed between the double pipe part 68 and the inner wall face of the cleaner container 45 within the clean chamber 51b.

The operation of the present embodiment is now explained. When an intake stroke, compression stroke, combustion stroke, and exhaust stroke of the engine 29 are repeated in association with back and forth linear movement of the piston, the outside air is introduced into the dirty chamber 51a within the cleaner container 45 via the intake duct 46. The outside air is cleaned while passing through the cleaner element 48 and is introduced into the clean chamber 51b. The cleaned air within the clean chamber 51b flows into the connecting tube 47 and is supplied to the throttle body 41. In the throttle body 41 the flow rate of cleaned air supplied from the air cleaner 39 is adjusted by the action of the throttle. An air-fuel mixture is formed by injecting fuel from the fuel injection valve 42 into the cleaned air flowing out of the throttle body 41. The air-fuel mixture is introduced into the combustion chamber by the action of the intake valve.

In the present embodiment, due to the double pipe part 52 being provided at the upstream end of the intake duct 46 the flow rate within the intake duct 46 is made uniform, and the air intake efficiency improves. It is unnecessary to extend the intake duct 46, and flow alignment of the flow of air within the intake duct 46 is realized effectively in a small space. Since the double pipe part 52 is at least partially integrated with the cleaner container 45, the number of components can be decreased.

The cleaner container 45 related to the present embodiment includes the wall body 53, which faces at least part of the dirty chamber 51a so as to be continuous from the outer wall face of the intake duct 46 and spreads outward and supports the intake duct 46, and the outer ring portion 54, which forms the double pipe part 52 by extending from the wall body 53 toward the upstream end of the intake duct 46 along the outer wall face of the intake duct 46 while maintaining an interval between itself and the outer wall face. Since the flange portion 52a, which spreads outward from the outer wall face of the intake duct 46 and supports the outer ring portion 54 with respect to the intake duct 46, is formed from the wall body 53 of the cleaner container 45, it is possible to realize flow alignment of the flow of air within the intake duct 46 by a simple arrangement and decrease the number of components.

The cleaner container 45 forms the pipe wall of the intake duct 46. Since the container wall of the cleaner container 45 also functions as the pipe wall of the intake duct 46, it is possible to dispose the intake duct 46 within the cleaner container 45 with high space efficiency, thus further decreasing the number of components.

In the air cleaner 39, the upstream end of the intake duct 46 is formed from a tube body having the flat region 58a at least partially in the peripheral direction, and the double pipe part 52 has, outside the tube body, the flat-plate outer ring portion 54a that spreads along an outer wall face of the flat region 58a so as to be continuous from the outer wall face of the cleaner container 45 while maintaining an interval between itself and the outer wall face of the flat region 58a. Compared with an intake duct 46 with a simple cylindrical shape, the cross-sectional area of the intake duct 46 can be increased by the action of the flat region 58a, and the amount of air intake can be increased. Furthermore, since the outer ring portion 54 of the double pipe part 52 spreads so as to be continuous from the outer wall face of the cleaner container 45, protrusion of the outer ring portion 54 can be minimized.

The intake duct 46 extends linearly along the outer wall of the cleaner container 45, the upstream end of the intake duct 46 opens in the recess part 56 recessed from the outer wall of the cleaner container 45, the double pipe part 52 is housed in the recess part 56, and the duct cover 57 blocking the recess part 56 at a position facing the upstream end of the intake duct 46 is mounted on the cleaner container 45. Since the intake duct 46 is formed linearly along the outer wall of the cleaner container 45, when molding the intake duct 46 release from a mold can be carried out well, and ease of production can be realized. The duct cover 57 can prevent the linear entry of dirt into the opening of the intake duct 46, thus suppressing the entry of dirt toward the dirty chamber 51a.

### (2) Air cleaner related to second embodiment

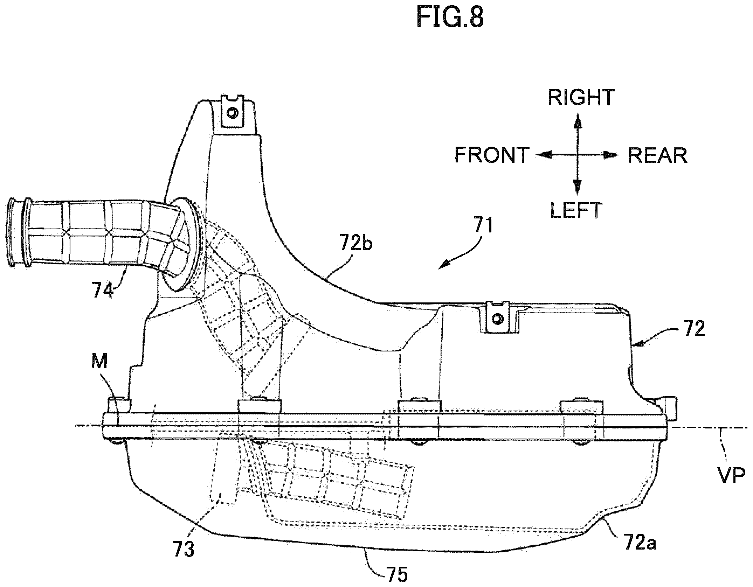

FIG. 8 schematically shows an air cleaner 71 related to a second embodiment. The air cleaner 71 related to the second embodiment can be fitted onto the two-wheeled motor vehicle 11 instead of the air cleaner 39 related to the first embodiment. The air cleaner 71 related to the second embodiment includes a cleaner container 72 that has a first container body 72a and a second container body 72b joined to each other via a mating face M along a vertical plane VP and that forms an interior space communicating with outside air and a supply destination (engine 29) for cleaned air, an intake duct 73 that is fixed to the first container body 72a, opens outside the cleaner container 72 via the upstream end exposed to the outside air, and provides communication between the interior space of the cleaner container 72 and the outside air space, and a connecting tube 74 that is fixed to the second container body 72b, opens in the interior space of the cleaner container 72 via the upstream end positioned within the interior space of the cleaner container 72, and is linked to the throttle body 41 via the downstream end on the outside of the cleaner container 72. The intake duct 73 and the connecting tube 74 are molded from an elastic body such as for example rubber.

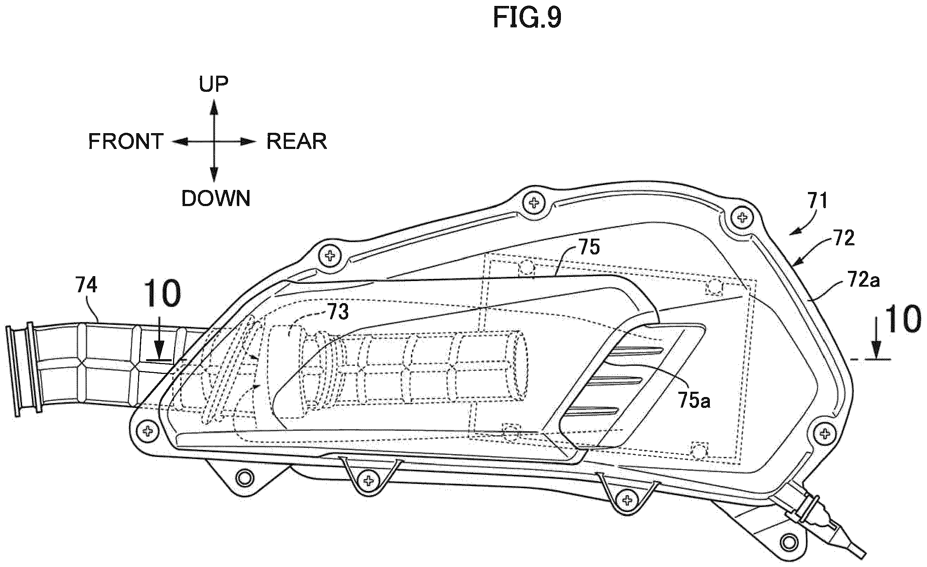

A duct cover 75 is mounted on the outer side of the first container body 72a, the duct cover 75 forming between itself and an outer face of the first container body 72a an auxiliary space, and the upstream end of the intake duct 73 opening in the auxiliary space. The duct cover 75 is hermetically joined to for example the first container body 72a by means of a screw. As shown in FIG. 9, the intake duct 73 forms a cylindrical passage having an axis extending horizontally in the vehicle body fore-and-aft direction. The upstream end of the intake duct 73 is disposed at a position in front of the mid position in the fore-and-aft direction of the cleaner container 72. The duct cover 75 has an edge 75a forming an opening between itself and the outer face of the cleaner container 72 further rearward than the mid position in the fore-and-aft direction of the cleaner container 72. Moreover, the edge 75a of the duct cover 75 extends rearward in going upward in the direction of gravity to thus prevent raindrops, etc. from entering as far as possible.

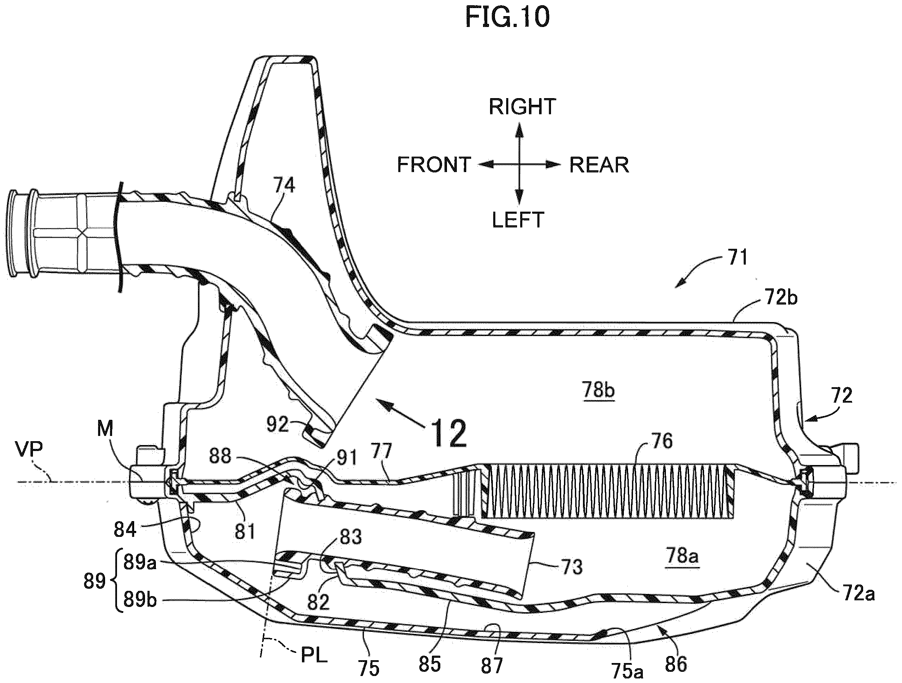

As shown in FIG. 10, a partition wall 77 retaining a cleaner element 76 is sandwiched between the first container body 72a and the second container body 72b. The partition wall 77 forms between itself and the first container body 72a a dirty chamber 78a communicating with the outside air space through the intake duct 73 and forms between itself and the second container body 72b a clean chamber 78b communicating with the throttle body 41 via the connecting tube 74. In this way, the interior space of the cleaner container 72 is partitioned into the dirty chamber 78a and the clean chamber 78b. The cleaner element 76 is disposed between the dirty chamber 78a and the clean chamber 78b. The outside air is cleaned while passing through the cleaner element 76 and is introduced into the clean chamber 78b. The downstream end of the intake duct 73 opens at a position facing the cleaner element 76.

The first container body 72a of the cleaner container 72 has an outer wall 81 that spreads along the partition wall 77 toward the cleaner element 76 from the mating face M along the vertical plane VP, and a support wall 82 that is continuous from the outer wall 81 and supports the intake duct 73. The support wall 82 is inclined so as to be displaced toward the downstream side of the intake duct 73 in going away from the outer wall 81 of the first container body 72a. In this way the outer wall 81 and the support wall 82 of the first container body 72a form a recess part 83 in the outer face of the cleaner container 72.

An air reservoir 84 having a sufficient volume between the outer wall 81 of the first container body 72a and the duct cover 75 is formed between the mating face M and the support wall 82. The upstream end of the intake duct 73 opens so as to face forward toward the air reservoir 84. A passage 87 that is narrower than the intake duct 73 and extends forward from an opening 86 partitioned at the edge 75a of the duct cover 75 to the air reservoir 84 is formed between the duct cover 75 and an outer wall face 85 of the first container body 72a that is continuous from the rear end of the support wall 82. In this way a labyrinth structure for the flow of air is established from the opening 86 to the intake duct 73, thus preventing raindrops, etc. from entering as far as possible.

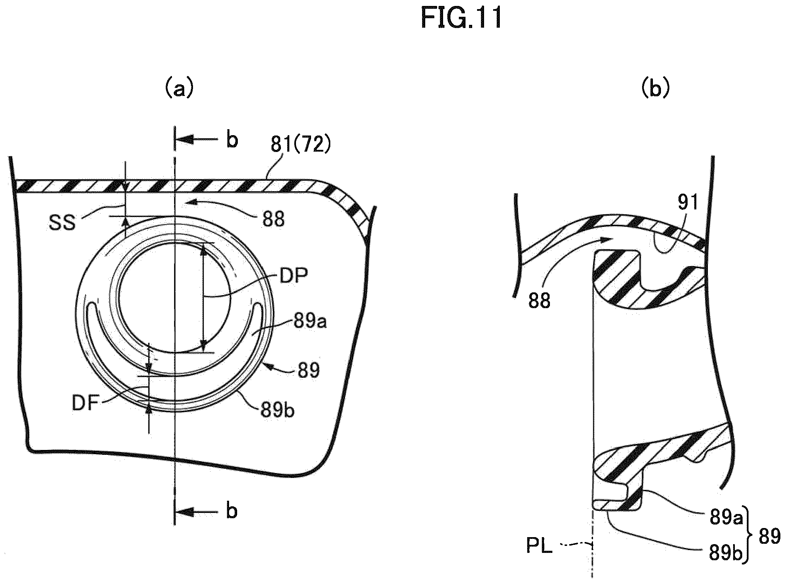

A double pipe part 89 is formed at the upstream end of the intake duct 73, the double pipe part 89 surrounding the intake duct 73 partially in the peripheral direction along the outer periphery of the intake duct 73 and being provided at a position biased from the outer wall 81 of the first container body 72a and a gap 88 is formed between the outer wall 81 and the intake duct 73. As shown in FIG. 11, the double pipe part 89 has a flange portion 89a that spreads outward from an outer wall face of the intake duct 73 partially in the peripheral direction, and an outer ring portion 89b that extends from the flange portion 89a toward the upstream end of the intake duct 73 along the outer wall face of the intake duct 73 while maintaining an interval between itself and the outer wall face. The upstream end of the intake duct 73 is disposed along the outer wall face of the first container body 72a, and the double pipe part 89 is biased toward a direction that goes away from the outer wall face of the first container body 72a. Because of this, a groove part formed between the outer wall face of the intake duct 73 and the outer ring portion 89b is formed into a crescent shape, and the outer wall of the first container body 72a is disposed so as to be close thereto on the side opposite to the crescent-shaped groove part. The outer ring portion 89b is formed from a cylindrical body that is eccentric with respect to a cylindrical body forming the upstream end of the intake duct 73 and has a larger diameter than that of the cylindrical body. However, the outer ring portion 89b is not necessarily a cylindrical body and may be another cross-sectional shape such as a polygon. The upstream end of the intake duct 73 and the outer ring portion 89b may be coaxial as long as an interval is formed partially in the peripheral direction between the two. A rib, other than the flange portion 89a, may be formed on the outer ring portion 89b, the rib linking the outer ring portion 89b to the outer wall face of the intake duct 73.

The gap 88 forms an interval SS, which corresponds to the distance between the outer face of the intake duct 73 and the outer ring portion 68b, between the upstream end of the intake duct 73 and the outer wall 81 of the first container body 72a. A distance DF between the outer wall face of the intake duct 73 and the double pipe part 89 is set to be 10% to 30% of a distance DP of the inner wall of the intake duct 73. Here, the upstream end of the intake duct 73 and the outer ring portion 89b are formed into cylindrical shapes with eccentric axes, the distance DF corresponds to the maximum distance in the radial direction between the outer wall face of the intake duct 73 and the outer ring portion 89b, and the distance DP corresponds to the internal diameter of the intake duct 73.

As shown in FIG. 10, a clearance part 91 is formed in the outer wall 81 of the first container body 72a, the clearance part 91 being recessed inward and facing the intake duct 73 with the gap 88 therebetween. The partition wall 77 is recessed toward the clean chamber 78b while following the clearance part 91 of the outer wall 81. A virtual plane PL including the upstream end of the intake duct 73 is inclined so as to be displaced toward the upstream side in going away from the outer wall 81 of the first container body 72a. Here, the upstream end of the outer ring portion 89b is in contact with the virtual plane PL including the upstream end of the intake duct 73. However, the upstream end of the outer ring portion 89b may extend further forward than the virtual plane PL including the upstream end of the intake duct 73 and the outer ring portion 89b may intersect the virtual plane PL.

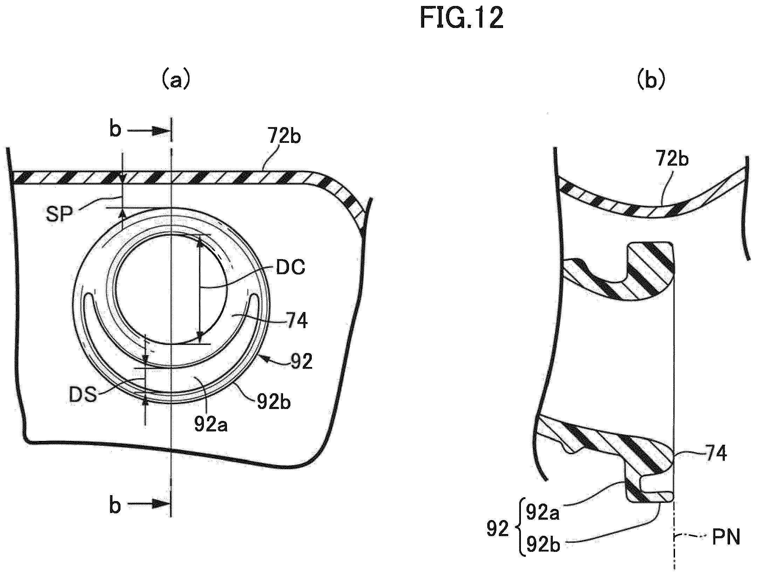

A double pipe part 92 is provided at the upstream end of the connecting tube 74 partially in the peripheral direction along the outer periphery of the connecting tube 74. As shown in FIG. 12, the double pipe part 92 has a flange portion 92a that spreads outward partially in the peripheral direction from an outer wall face of the connecting tube 74, and an outer ring portion 92b that extends from the flange portion 92a toward the upstream end of the connecting tube 74 along the outer wall face while maintaining an interval between itself and the outer wall face. The upstream end of the connecting tube 74 is disposed along an inner wall face of the second container body 72b and the double pipe part 92 is biased toward a direction that goes away from the inner wall face of the second container body 72b. Because of this the groove part formed between the outer wall face of the connecting tube 74 and the outer ring portion 92b is formed into a crescent shape, and the inner wall of the second container body 72b is disposed so as to be close thereto on the side opposite to the crescent-shaped groove part. The outer ring portion 92b is formed from a cylindrical body that is eccentric with respect to the cylindrical body forming the upstream end of the connecting tube 74 and has a larger diameter than that of the cylindrical body. However, the outer ring portion 92b is not necessarily a cylindrical body and may be another cross-sectional shape such as a polygon. The upstream end of the connecting tube 74 and the outer ring portion 92b may be coaxial as long as an interval is formed partially in the peripheral direction between the two. A rib, other than the flange portion 92a, may be formed on the outer ring portion 92b, the rib linking the outer ring portion 92b to the outer wall face of the connecting tube 74. Here, the upstream end of the outer ring portion 92b is in contact with a virtual plane PN including the upstream end of the connecting tube 74. However, the upstream end of the outer ring portion 92b may extend further forward than the virtual plane PN including the upstream end of the connecting tube 74 and the outer ring portion 92b may intersect the virtual plane PN.

A distance DS between the outer wall face of the connecting tube 74 and the double pipe part 92 is set to be 10% to 30% of a distance DC of the inner wall of the connecting tube 74. Here, since the upstream end of the connecting tube 74 and the outer ring portion 92b are formed into cylindrical shapes, the distance DS corresponds to the maximum distance in the radial direction between the outer wall face of the connecting tube 74 and the outer ring portion 92b, and the distance DC corresponds to the internal diameter of the connecting tube 74. An interval SP is formed between the upstream end of the connecting tube 74 and the inner wall face of the second container body 72b, the interval SP corresponding to the distance DS between the outer face of the connecting tube 74 and the outer ring portion 92b.

The operation of the present embodiment is now explained. In the present embodiment, due to the double pipe part 89 of the intake duct 73 being biased toward a direction going away from the outer wall 81 of the first container body 72a, the gap 88 formed between the outer wall 81 of the first container body 72a and the intake duct 73 can function as the double pipe part 89, the flow rate within the intake duct 73 is made uniform, and the air intake efficiency improves. Because of this, it is desirable that the size (interval SS) of the gap 88 formed between the intake duct 73 and the outer wall 81 of the first container body 72a is set to be 10% to 30% of the distance DP of the inner wall of the intake duct 73. It is unnecessary to extend the intake duct 73, and flow alignment of the flow of air within the intake duct 73 is realized effectively in a small space. In particular, since the intake duct 73 can be as close to the outer wall of the cleaner container 72 as possible, the intake duct 73 can be disposed outside the cleaner container 72 with high space efficiency.

In the air cleaner 71 related to the present embodiment, the clearance part 91, which is recessed inward and faces the intake duct 73 with the gap 88 therebetween, is formed in the outer wall 81 of the first container body 72a. Since the upstream end of the intake duct 73 is biased toward the interior of the cleaner container 72, protrusion of the double pipe part 89 can be minimized.

The virtual plane PL including the upstream end of the intake duct 73 is inclined so as to be displaced toward the upstream side in going away from the outer wall 81 of the cleaner container 72. Since the upstream end of the intake duct 73 is directed toward the interior of the cleaner container 72, air easily flows in between the intake duct 73 and the outer wall 81 of the cleaner container 72, the double pipe part 89 functions effectively, and protrusion of the double pipe part 89 can be minimized.

The cleaner container 72 related to the present embodiment has the support wall 82, which is continuous from the outer wall 81 of the cleaner container 72 and supports the intake duct 73. Since the outer wall 81 and the support wall 82 of the cleaner container 72 form the recess part 83 in the outer face of the cleaner container 72, the double pipe part 89 is housed in the recess part 83. In this way protrusion of the double pipe part 89 is avoided.

The support wall 82 of the first container body 72a is inclined so as to be displaced toward the downstream side of the intake duct 73 in going away from the outer wall 81 of the cleaner container 72. Due to the support wall 82 being thus disposed so as to be inclined, the recess part 83 formed by the outer wall 81 and the support wall 82 of the cleaner container 72 does not become unnecessarily deep, and the volume of the interior of the cleaner container 72 can be increased as far as possible.

### (3) Air cleaner related to third embodiment

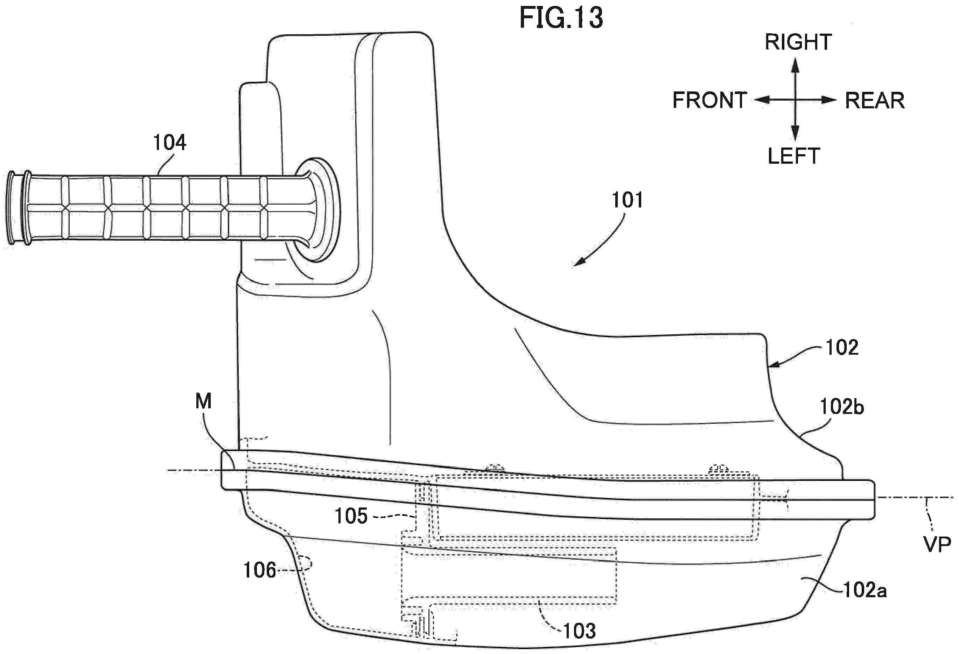

FIG. 13 schematically shows an air cleaner 101 related to a third embodiment. The air cleaner 101 related to the third embodiment can be fitted on the two-wheeled motor vehicle 11 instead of the air cleaner 39 related to the first embodiment. The air cleaner 101 related to the third embodiment includes a cleaner container 102 that has a first container body 102a and a second container body 102b joined to each other via a mating face M along a vertical plane VP and that forms an interior space communicating with outside air and a supply destination (engine 29) for cleaned air, an intake duct 103 that is fixed to the first container body 102a and has an upstream end exposed to the outside air, and a connecting tube 104 that is fixed to the second container body 102b, opens in the interior space of the cleaner container 102 via the upstream end positioned within the interior space of the cleaner container 102, and is linked to the throttle body 41 via the downstream end on the outside of the cleaner container 102.

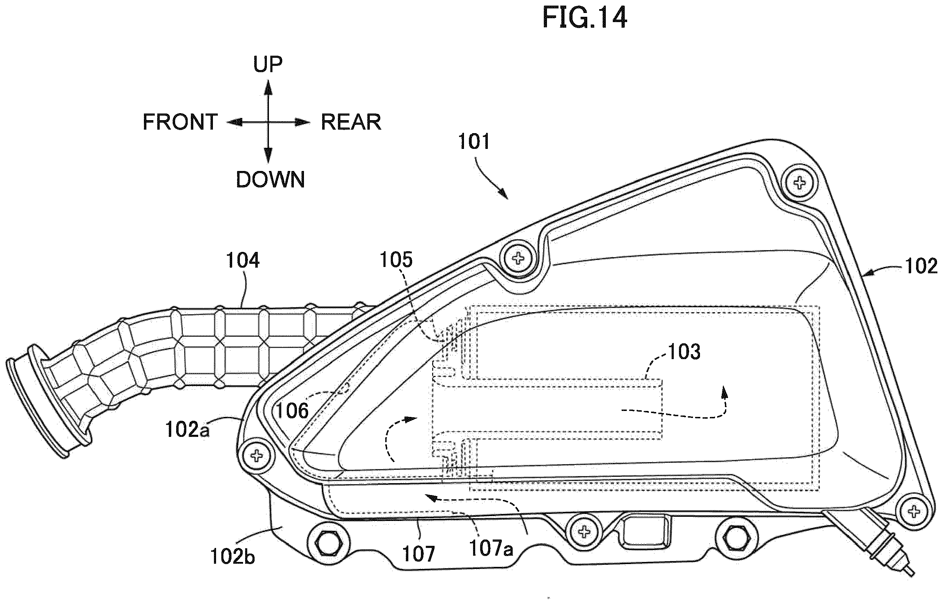

An air reservoir 106 is formed on the inside of the first container body 102a, the air reservoir 106 being partitioned by a vertical wall 105 spreading along a virtual face orthogonal to the vertical plane VP of the mating face M and supporting the intake duct 103, and the upstream end of the intake duct 103 opening in the air reservoir 106. A sufficient volume is established for the air reservoir 106 between the vertical wall 105 and a wall body of the first container body 102a facing the vertical wall 105. As shown in FIG. 14, the intake duct 103 forms a cylindrical passage having an axis extending horizontally in the vehicle body fore-and-aft direction. The upstream end of the intake duct 103 is disposed at a position further forward than the middle position in the fore-and-aft direction of the cleaner container 102. A lower face of the air reservoir 106 is covered by a duct cover 107. The duct cover 107 has an edge 107a forming an opening between itself and an outer face of the cleaner container 102 further rearward than the vertical wall 105. Since the edge 107a of the duct cover 107 forms the opening in a rear part of the vehicle body beneath the vertical wall 105 in the direction of gravity, raindrops, etc. can be prevented from entering a s much as possible.

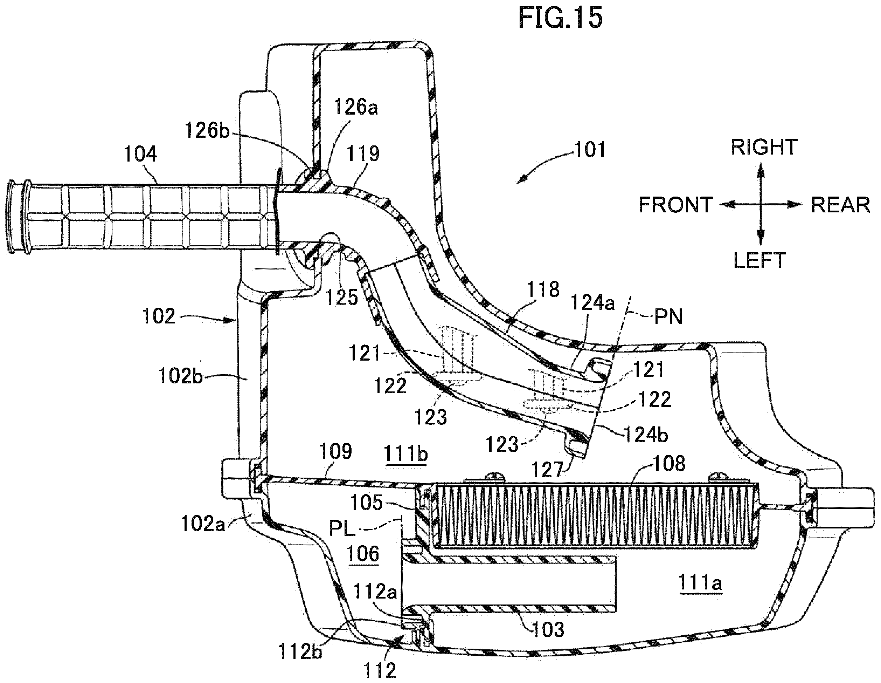

As shown in FIG. 15, a partition wall 109 retaining a cleaner element 108 is sandwiched between the first container body 102a and the second container body 102b. The partition wall 109 forms between itself and the first container body 102a the air reservoir 106 and a dirty chamber 111a communicating with the outside air space through the intake duct 103 and forms between itself and the second container body 102b a clean chamber 111b communicating with the throttle body 41 via the connecting tube 104. In this way, the interior space of the cleaner container 102 is partitioned into the air reservoir 106, the dirty chamber 111a, and the clean chamber 111b. The cleaner element 108 is disposed between the dirty chamber 111a and the clean chamber 111b. The outside air is cleaned while passing through the cleaner element 108 and is introduced into the clean chamber 111b. The downstream end of the intake duct 103 opens at a position facing the cleaner element 108.

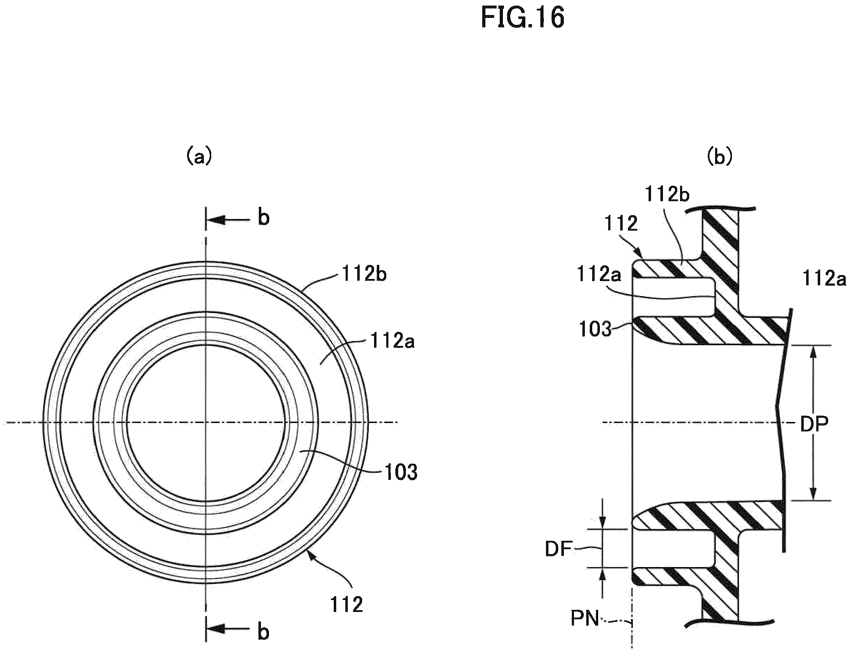

The vertical wall 105 has a peripheral edge that is continuous from an outer wall face of the intake duct 103, spreads outward, and is fixed to the cleaner container 102 and the partition wall 109. A double pipe part 112 surrounding the upstream end of the intake duct 103 is formed on the vertical wall 105 along the outer periphery of the intake duct 103 so as to be continuous from the vertical wall 105. As shown in FIG. 16, the double pipe part 112 has a flange portion 112a that is part of the vertical wall 105 and spreads outward from the outer wall face of the intake duct 103, and an outer ring portion 112b that extends from the flange portion 112a toward the upstream end of the intake duct 103 along the outer wall face of the intake duct 103 while maintaining an interval between itself and the outer wall face. The outer ring portion 112b is formed from a cylindrical body that is coaxial with a cylindrical body forming the upstream end of the intake duct 103 and has a larger diameter than that of the cylindrical body. However, the outer ring portion 112b is not necessarily a cylindrical body and may be another cross-sectional shape such as a polygon. Furthermore, the upstream end of the intake duct 103 and the outer ring portion 112b are not necessarily coaxial and may be eccentric. A rib, other than the flange portion 112a, that links the outer ring portion 112b to the outer wall face of the intake duct 103 may be formed on the outer ring portion 112b. The flange portion 112a may be omitted, and the outer ring portion 112b may be fixed to the outer wall face of the intake duct 103 by means of a plurality of ribs separated in the peripheral direction. The double pipe part 112 is molded integrally with the vertical wall 105. The vertical wall 105 is molded from for example a hard resin material.

Here, the upstream end of the outer ring portion 112b makes contact with a virtual plane PL including the upstream end of the intake duct 103. However, the upstream end of the outer ring portion 112b may extend further forward than the virtual plane PL including the upstream end of the intake duct 103 and the outer ring portion 112b may intersect the virtual plane PL.

A distance DF between the outer wall face of the intake duct 103 and the double pipe part 112 is set so as to be 10% to 30% of a distance DP of the inner wall of the intake duct 103. Here, since the upstream end of the intake duct 103 and the outer ring portion 112b are formed into coaxial cylindrical shapes, the distance DF corresponds to the difference in the radial direction between the outer wall face of the intake duct 103 and the outer ring portion 112b, and the distance DP corresponds to the internal diameter of the intake duct 103.

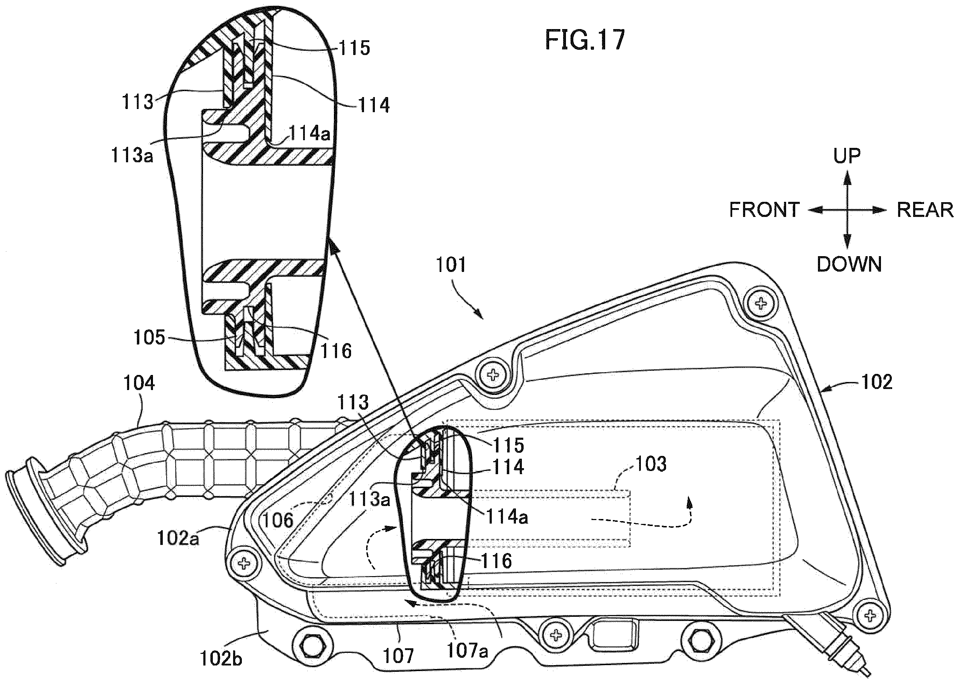

As shown in FIG. 17, the first container body 102a of the cleaner container 102, in cooperation with the partition wall 109, has a first fixed wall 113 that is superimposed on the vertical wall 105 from the upstream side of the intake duct 103 and has a first support hole 113a corresponding to the double pipe part 112, and a second fixed wall 114 that is superimposed on the vertical wall 105 from the downstream side of the intake duct 103 and has a second support hole 114a corresponding to the outer periphery of the intake duct 103 and having a diameter smaller than that of the first support hole 113a. The first fixed wall 113 and the second fixed wall 114 may be continuous in the peripheral direction along the outer edge of the vertical wall 105 via the first container body 102a and the partition wall 109. A retaining rib 115 protruding toward the vertical wall 105 is formed on the first container body 102a of the cleaner container 102 and the partition wall 109 between the first fixed wall 113 and the second fixed wall 114. A groove 116 receiving the retaining rib 115 is formed in an outer edge face of the vertical wall 105. Since the second fixed wall 114 is in surface contact with the flange portion 112a from the downstream side, noise generation is prevented.

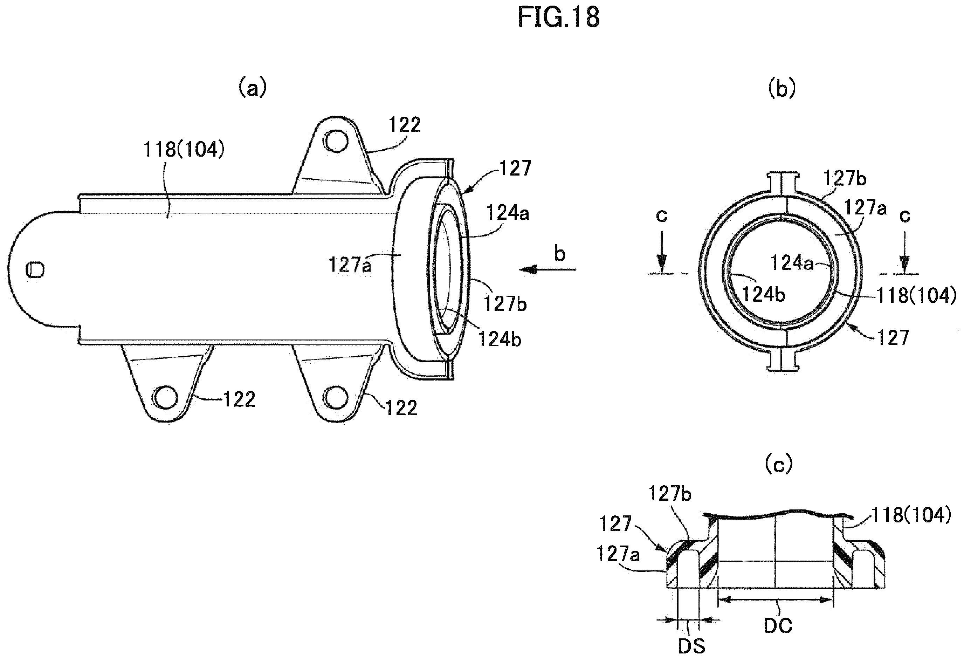

As shown in FIG. 15, the connecting tube 104 has an interior member 118 that is disposed within the clean chamber 111b while bending and is molded from a hard resin material, and a linking member 119 that links the cleaner container 102 and the throttle body 41, extends through a wall of the second container body 102b, faces the interior of the clean chamber 111b via the upstream end, and is directly linked to the interior member 118. The linking member 119 is molded from an elastic body such as a rubber material. The interior member 118 has a tab 122 that is superimposed on the extremity of each of a plurality of bosses 121 rising perpendicularly from an inner wall of the clean chamber 111b. Due to the tab 122 being held on the extremity of the boss 121 by means of a screw 123 the interior member 118 is supported in a floating state within the clean chamber 111b. As shown in FIG. 18, three screws 123 have screw axes that extend in parallel with each other, and the screw axes and the connecting tube 104 do not intersect. Here, the interior member 118 is formed from a first half body 124a and a second half body 124b formed from semi-cylindrical bodies that are mated to each other via curved faces. The second half body 124a and the second half body 124b are hermetically joined to each other by means of for example melt-bonding. The tab 122 is formed integrally with either one of the first half body 124a and the second half body 124b.

As shown in FIG. 15, the linking member 119 has a first annular body 126a that makes contact with an inner wall face of the second container body 102b from the inside of the second container body 102b when it is inserted into an insertion opening 125 of the second container body 102b, and a second annular body 126b that faces the first annular body 126a in the axial direction and is in contact with an outer wall face of the second container body 102b from the outside of the second container body 102b. The first annular body 126a is in intimate contact with the inner wall face of the second container body 102b via a vertical plane orthogonal to the axis of the insertion opening 125. The second annular body 126b is in intimate contact with the outer wall face of the second container body 102b via a vertical plane orthogonal to the axis of the insertion opening 125. In this way the wall body of the second container body 102b is sandwiched between the first annular body 126a and the second annular body 126b. The external diameter of the first annular body 126a is of a size that allows the entire first annular body 126a to enter the insertion opening 125 in response to deformation of the first annular body 126a when the linking member 119 is inserted into the insertion opening 125 via the upstream end. The external diameter of the second annular body 126b is larger than the first annular body 126a and is of a size such that it remains outside the insertion opening 125 even when the first annular body 126a is deformed at the time of entering the insertion opening 125. The first annular body 126a has a tapered face that gradually increases in diameter from the upstream side and is continuous with the vertical plane via the largest diameter. The interior member 118 is inserted into the upstream end of the linking member 119. The internal diameter of the connecting tube 104 is continuous from the interior member 118 throughout the linking member 119.

A double pipe part 127 is provided at the upstream end of the connecting tube 104 along the outer periphery of the connecting tube 104. As shown in FIG. 18, the double pipe part 127 has a flange portion 127a that spreads outward from an outer wall face of the connecting tube 104, and an outer ring portion 127b that extends from the flange portion 127a toward the upstream end of the connecting tube 104 along the outer wall face while maintaining an interval between itself and the outer wall face. The outer ring portion 127b is formed from a cylindrical body that is coaxial with a cylindrical body forming the upstream end of the connecting tube 104 and has a larger diameter than that of the cylindrical body. However, the outer ring portion 127b is not necessarily a cylindrical body and may be another cross-sectional shape such as a polygon. Furthermore, the upstream end of the connecting tube 104 and the outer ring portion 127b are not necessarily coaxial and may be eccentric. A rib, other than the flange portion 127a, that links the outer ring portion 127b to the outer wall face of the connecting tube 104 may be formed on the outer ring portion 127b. The flange portion 127a may be omitted, and the outer ring portion 127b may be fixed to the outer wall face of the connecting tube 104 by means of a plurality of ribs separated in the peripheral direction. Here, the upstream end of the outer ring portion 127b is in contact with a virtual plane PN including the upstream end of the connecting tube 104. However, the upstream end of the outer ring portion 127b may extend further forward than the virtual plane PN including the upstream end of the connecting tube 104 and the outer ring portion 127b may intersect the virtual plane PN.

A distance DS between the outer wall face of the connecting tube 104 and the double pipe part 127 is set to be 10% to 30% of a distance DC of an inner wall of the connecting tube 104. Here, since the upstream end of the connecting tube 104 and the outer ring portion 127b are formed into coaxial cylindrical shapes, the distance DS corresponds to the difference in the radial direction between the outer wall face of the connecting tube 104 and the outer ring portion 127b, and the distance DC corresponds to the internal diameter of the connecting tube 104. As shown in FIG. 15, a gap is formed between the double pipe part 127 and the inner wall face of the cleaner container 102 within the clean chamber 111b.

The operation of the present embodiment is now explained. In the present embodiment, due to the double pipe part 112 being provided at the upstream end of the intake duct 103 the flow rate within the intake duct 103 is made uniform, and the air intake efficiency improves. It is unnecessary to extend the intake duct 103, and flow alignment of the flow of air within the intake duct 103 is realized effectively in a small space. Since the vertical wall 105 functions also as the flange portion 112a of the double pipe part 112, the double pipe part 112 can be fixed strongly to the vertical wall 105, and the number of components can be decreased.

In the air cleaner 101 related to the present embodiment, the cleaner container 102 includes the first fixed wall 113, which is superimposed on the vertical wall 105 from the upstream side of the intake duct 103 and has the first support hole 113a corresponding to the double pipe part 112, and the second fixed wall 114, which is superimposed on the vertical wall 105 from the downstream side of the intake duct 103 and has the second support hole 114a corresponding to the outer periphery of the intake duct 103. Since the vertical wall 105 of the intake duct 103 is fixed by means of the first fixed wall 113 and the second fixed wall 114 of the cleaner container 102, the intake duct 103 is strongly held by the cleaner container 102. The intake duct 103 can be positioned well with respect to the cleaner container 102.

The air cleaner 101 related to the present embodiment includes the retaining rib 115, which is formed on the cleaner container 102 between the first fixed wall 113 and the second fixed wall 114 and protrudes toward the vertical wall 105, and the groove 116, which is formed in the outer peripheral face of the vertical wall 105 and receives the retaining rib 115. Since the retaining rib 115 of the cleaner container 102 is received by the groove 116 of the vertical wall 105 between the first fixed wall 113 and the second fixed wall 114, the intake duct 103 is strongly held by the cleaner container 102, and vibration of the vertical wall 105 is suppressed in response to the retaining rib 115 being pressed into the groove 116. In this way, the intake duct 103 can be prevented from generating noise.

The distance between the outer wall face of the intake duct 103 and the double pipe part 112 is set to be 10% to 30% of the distance of the inner wall of the intake duct 103. Due to the distance between the outer wall face of the intake duct 103 and the double pipe part 112 being appropriately set with respect to the magnitude of the flow path for the flow of air, flow alignment of the flow of air within the intake duct 103 is reliably realized.

In the air cleaner 101 related to the present embodiment, since the upstream end of the double pipe part 112 is in contact with the virtual plane PL including the upstream end of the intake duct 103, the double pipe part 112 reliably surrounds the upstream end of the intake duct 103. Therefore, flow alignment of the flow of air within the intake duct 103 is reliably realized. However, the double pipe part 112 may intersect the virtual plane PL. In this case, since the double pipe part 112 extends further toward the upstream than the upstream end of the intake duct 103, the double pipe part 112 reliably surrounds the upstream end of the intake duct 103. Therefore, flow alignment of the flow of air within the intake duct 103 is reliably realized.

### (4) Verification of flow rate distribution

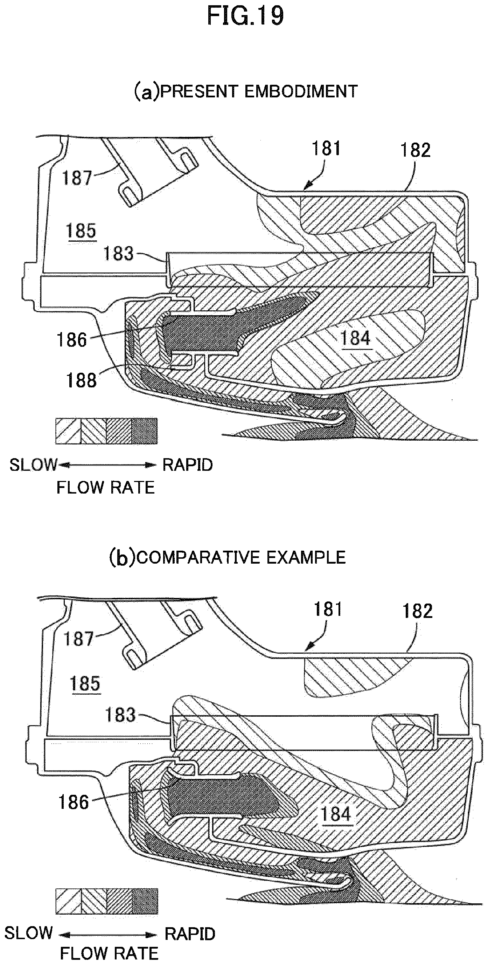

As shown in FIG. 19, the present inventors verified the effects of an intake duct having a double pipe part. When carrying out verification, in an air cleaner 181 a dirty chamber 184 and a clean chamber 185 separated by a cleaner element 183 are formed within a cleaner container 182, and an intake duct 186 providing communication between the dirty chamber 184 and a space outside the cleaner container 182 and a connecting tube 187 opening in a space of the clean chamber 185 via its upstream end within the clean chamber 185 are fixed to the cleaner container 182. In the present embodiment, a double pipe part 188 is provided at the upstream end of the intake duct 186. In accordance with the double pipe part 188 of the intake duct 186, compared with an arrangement in which no double pipe part is added (Comparative Example), flow alignment within the intake duct 186 can be realized without changing the length of the intake duct 186 or another arrangement, and a flow of air flowing out toward the connecting tube 187, which sucks in air, can be produced. On the other hand, in the Comparative Example, the flow of air flowing out from the intake duct 186 heads toward a wall face facing the cleaner element 183 so as to go away from the opening of the connecting tube 187.

## Claims

1. An air cleaner (39) for supplying outside air to an internal combustion engine, comprising
a cleaner container (45) that forms a dirty chamber (51a) communicating with outside air and a clean chamber (51b) communicating with a connecting tube (47) that leads to the internal combustion engine, which is a supply destination for cleaned air,
a cleaner element (48) that is disposed within the cleaner container (45) between the dirty chamber (51a) and the clean chamber (51b), and
an intake duct (46) that is fixed to the cleaner container (45) and provides communication between a space outside the cleaner container (45) and the dirty chamber (5 1a),
wherein
provided at an upstream end of the intake duct (46) is a double pipe part (52) that is provided along an outer periphery of the intake duct (46) and is at least partially integrated with the cleaner container (45),
an extremity part, on the upstream end side of the intake duct (46), of the double pipe part (52) is a free end, and the double pipe part (52) and the intake duct (46) oppose each other only across an empty space therebetween, and
an interior member (61) linked to the connecting tube (47) is provided in the clean chamber (51b), **characterized in that**
another double pipe part (68) is provided at an upstream end of the interior member (61).

2. The air cleaner according to Claim 1, wherein the cleaner container (45) comprises
a wall body (53) that faces at least part of the dirty chamber (51a) so as to be continuous from an outer wall face of the intake duct (46) and spread outward, and supports the intake duct (46), and
an outer ring portion (54) that extends from the wall body (53) toward the upstream end of the intake duct (46) along the outer wall face of the intake duct (46) while maintaining an interval between the outer ring portion (54) and the outer wall face, and forms the double pipe part (52).

3. The air cleaner according to Claim 1 or 2, wherein the cleaner container (45) at least partially forms a pipe wall (55) of the intake duct (46).

4. The air cleaner according to any one of Claims 1 to 3, wherein the upstream end of the intake duct (46) is formed from a tube body having a flat region (58a) at least partially in a peripheral direction thereof, and
the double pipe part (52) has an outer ring portion (54) that spreads along an outer wall face of the flat region (58a) so as to be continuous from an outer wall face of the cleaner container (45) while maintaining an interval between the outer ring portion (54) and the outer wall face of the flat region (58a) outside the tube body.

5. The air cleaner according to any one of Claims 1 to 4, wherein the intake duct (46) extends linearly along the outer wall (55) of the cleaner container (45), the upstream end of the intake duct (46) opens in a recess part (56) that is recessed from the outer wall (55) of the cleaner container (45), the double pipe part (52) is housed in the recess part (56), and a duct cover (57) is mounted on the cleaner container (45), the duct cover (57) blocking the recess part (56) at a position facing the upstream end of the intake duct (46).

6. An air cleaner (101) for supplying outside air to an internal combustion engine, comprising
a cleaner container (102) that forms a dirty chamber (111a) communicating with outside air and a clean chamber (111b) communicating with a connecting tube (104) that leads to the internal combustion engine, which is a supply destination for cleaned air,
a cleaner element (108) that is disposed within the cleaner container (102) between the dirty chamber (111a) and the clean chamber (111b), and
an intake duct (103) that is fixed to the cleaner container (102) and provides communication between the dirty chamber (111a) and an outside air space,
wherein
the air cleaner (101) comprises a support wall (105) that is continuous from an outer wall face of the intake duct (103), spreads outward, and is fixed to the cleaner container (102),
a double pipe part (112) that is continuous from the support wall (105) and surrounds an upstream end of the intake duct (103) along an outer periphery of the intake duct (103), and
an interior member (118) linked to the connecting tube (104) is provided in the clean chamber (111b), **characterized in that**
another double pipe part (127) is provided at an upstream end of the interior member (118).

7. The air cleaner according to Claim 6, wherein a distance (DF) between an outer wall face of the intake duct (103) and the double pipe part (112) is set to be 10% to 30% of a distance (DP) of an inner wall of the intake duct (103).

8. The air cleaner according to Claim 6 or 7, wherein an upstream end of the double pipe part (112) is in contact with a virtual plane (PL) on which the upstream end of the intake duct (103) lies, or the double pipe part (112) intersects the virtual plane (PL).

## Patentansprüche

1. Luftreiniger (39), um einem Verbrennungsmotor Außenluft zuzuleiten, der aufweist einen Reinigerbehälter (45), der eine Schmutzkammer (51a) bildet, die mit der Außenluft in Austausch steht, und eine Reinkammer (51b), die mit einem Verbindungsrohr (47) in Austausch steht, das zum Verbrennungsmotor führt, der ein Zuleitungsziel für gesäuberte Luft ist,
ein Reinigerelement (48), das im Reinigerbehälter (45) zwischen der Schmutzkammer (51a) und der Reinkammer (51b) angeordnet ist, und
einen Einlasskanal (46), der am Reinigerbehälter (45) befestigt ist und einen Austausch zwischen einem Raum außerhalb des Reinigerbehälters (45) und der Schmutzkammer (51a) vorsieht,
wobei
an einem vorgelagerten Ende des Einlasskanals (46) ein Doppelrohrteil (52) vorgesehen ist, das entlang einem Außenumfang des Einlasskanals (46) vorgesehen ist und wenigstens teilweise in den Reinigerbehälter (45) integriert ist,
ein äußerster Teil an der vorgelagerten Endseite des Einlasskanals (46) des Doppelrohrteils (52) ein freies Ende ist, und das Doppelrohrteil (52) und der Einlasskanal (46) einander nur über einen leeren Raum dazwischen gegenüberliegen, und
ein Innenelement (61), das mit dem Verbindungsrohr (47) verbunden ist, in der Reinkammer (51b) vorgesehen ist,
**dadurch gekennzeichnet, dass**
ein weiteres Doppelrohrteil (68) an einem vorgelagerten Ende des Innenelements (61) vorgesehen ist.

2. Luftreiniger nach Anspruch 1, wobei der Reinigerbehälter (45) aufweist
einen Wandkörper (53), der wenigstens einem Teil der Reinkammer (51a) zugewandt ist, um so von einer Außenwandfläche des Einlasskanals (46) fortlaufend zu sein und sich nach außen zu erstrecken, und der den Einlasskanal (46) hält, und
einen Außenringbereich (54), der vom Wandkörper (53) in Richtung des vorgelagerten Endes des Einlasskanals (46) entlang der Außenwandfläche des Einlasskanals (46) verläuft, wobei ein Abstand zwischen dem Außenringbereich (54) und der Außenwandfläche beibehalten wird, und das Doppelrohrteil (52) bildet.

3. Luftreiniger nach Anspruch 1 oder 2, wobei der Reinigerbehälter (45) wenigstens teilweise eine Rohrwand (55) des Einlasskanals (46) bildet.

4. Luftfilter nach einem der Ansprüche 1 bis 3, wobei das vorgelagerte Ende des Einlasskanals (46) aus einem Rohrkörper ausgebildet ist, der ein flaches Gebiet (58a) wenigstens teilweise in einer Umfangsrichtung davon hat, und
das Doppelrohrteil (52) einen Außenringbereich (54) hat, der sich entlang einer Außenwandfläche des flachen Gebiets (58a) erstreckt, um so von einer Außenwandfläche des Reinigerbehälters (45) fortlaufend zu sein, während ein Abstand zwischen dem Außenringbereich (54) und der Außenwandfläche des flachen Gebiets (58a) außerhalb des Rohrkörpers beibehalten wird.

5. Luftfilter nach einem der Ansprüche 1 bis 4, wobei der Einlasskanal (46) linear entlang der Außenwand (55) des Reinigerbehälters (45) verläuft, das vorgelagerte Ende des Einlasskanals (46) sich in ein Aussparungsteil (56) öffnet, das von der Außenwand (55) des Reinigerbehälters (45) ausgespart ist, das Doppelrohrteil (52) im Aussparungsteil (56) aufgenommen ist, und eine Kanalverkleidung (57) am Reinigerbehälter (45) angebracht ist, wobei die Kanalverkleidung (57) das Aussparungsteil (56) an einer Position sperrt, die dem vorgelagerten Ende des Einlasskanals (46) zugewandt ist.

6. Luftreiniger (101), um Außenluft einem Verbrennungsmotor zuzuleiten, der aufweist:
einen Reinigerbehälter (102), der eine Schmutzkammer (111a) bildet, die mit der Außenluft in Austausch steht, und eine Reinkammer (51b), die mit einem Verbindungsrohr (104) in Austausch steht, das zum Verbrennungsmotor führt, der ein Zuleitungsziel für gesäuberte Luft ist,
ein Reinigerelement (108), das im Reinigerbehälter (102) zwischen der Schmutzkammer (111a) und der Reinkammer (111b) angeordnet ist, und
einen Einlasskanal (103), der am Reinigerbehälter (102) befestigt ist und einen Austausch zwischen der Schmutzkammer (111a) und einem Außenluftraum vorsieht,
wobei
der Luftfilter (101) eine Trägerwand (105) aufweist, die von der Außenwandfläche des Einlasskanals (103) fortlaufend ist, sich nach außen erstreckt und am Reinigerbehälter (102) befestigt ist,
ein Doppelrohrteil (112), das von der Trägerwand (105) fortlaufend ist und ein vorgelagertes Ende des Einlasskanals (103) entlang einem Außenumfang des Einlasskanals (103) umgibt, und
ein Innenelement (118), das mit dem Verbindungsrohr (104) verbunden ist, das in der Reinkammer (111b) vorgesehen ist,
**dadurch gekennzeichnet, dass**
ein weiteres Doppelrohrteil (127) an einem vorgelagerten Ende des Innenelements (118) vorgesehen ist.

7. Luftreiniger nach Anspruch 6, wobei ein Abstand (DF) zwischen einer Außenwandfläche des Einlasskanals (103) und dem Doppelrohrteil (112) auf 10 % bis 30 % eines Abstands (DP) einer Innenwand des Einlasskanals (103) festgelegt ist.

8. Luftfilter nach Anspruch 6 oder 7, wobei ein vorgelagertes Ende des Doppelrohrteils (112) in Kontakt mit einer virtuellen Ebene (PL) steht, an der das vorgelagerte Ende des Einlasskanals (103) liegt, oder das Doppelrohrteil (112) die virtuelle Ebene (PL) schneidet.

## Revendications

1. Épurateur d'air (39) pour alimenter en air extérieur un moteur à combustion interne, comprenant
un contenant d'épurateur (45) qui forme une chambre sale (51a) communiquant avec l'air extérieur et une chambre propre (51b) communiquant avec un tube de raccordement (47) qui mène au moteur à combustion interne, qui est une destination d'alimentation pour de l'air purifié,
un élément d'épurateur (48) qui est disposé au sein du contenant d'épurateur (45) entre la chambre sale (51a) et la chambre propre (51b), et
un conduit d'admission (46) qui est fixé au contenant d'épurateur (45) et prévoit une communication entre un espace à l'extérieur du contenant d'épurateur (45) et la chambre sale (51a),
dans lequel, à une extrémité amont du conduit d'admission (46), est prévue une partie de tuyau double (52) qui est prévue le long d'une périphérie externe du conduit d'admission (46) et est au moins partiellement solidaire du contenant d'épurateur (45),
une partie d'extrémité, sur le côté d'extrémité amont du conduit d'admission (46), de la partie de tuyau double (52) est une extrémité libre, et la partie de tuyau double (52) et le conduit d'admission (46) sont opposés l'un à l'autre uniquement de part et d'autre d'un espace vide entre eux, et
un organe intérieur (61) relié au tube de raccordement (47) est prévu dans la chambre propre (51b), **caractérisé en ce que**
une autre partie de tuyau double (68) est prévue à une extrémité amont de l'organe intérieur (61).

2. Épurateur d'air selon la revendication 1, dans lequel le contenant d'épurateur (45) comprend
un corps de paroi (53) qui fait face à au moins une partie de la chambre sale (51a) de façon à être continu à partir d'une face de paroi externe du conduit d'admission (46) et à s'étendre vers l'extérieur, et porte le conduit d'admission (46), et
une partie de bague externe (54) qui s'étend à partir du corps de paroi (53) vers l'extrémité amont du conduit d'admission (46) le long de la face de paroi externe du conduit d'admission (46) tout en conservant un intervalle entre la partie de bague externe (54) et la face de paroi externe, et forme la partie de tuyau double (52).

3. Épurateur d'air selon la revendication 1 ou 2, dans lequel le contenant d'épurateur (45) forme au moins partiellement une paroi de tuyau (55) du conduit d'admission (46).

4. Épurateur d'air selon l'une quelconque des revendications 1 à 3, dans lequel l'extrémité amont du conduit d'admission (46) est formée à partir d'un corps de tube ayant une région plate (58a) au moins partiellement dans une direction périphérique de celui-ci, et
la partie de tuyau double (52) possède une partie de bague externe (54) qui s'étend le long d'une face de paroi externe de la région plate (58a) de façon à être continue à partir d'une face de paroi externe du contenant d'épurateur (45) tout en conservant un intervalle entre la partie de bague externe (54) et la face de paroi externe de la région plate (58a) à l'extérieur du corps de tube.

5. Épurateur d'air selon l'une quelconque des revendications 1 à 4, dans lequel le conduit d'admission (46) s'étend linéairement le long de la paroi externe (55) du contenant d'épurateur (45), l'extrémité amont du conduit d'admission (46) s'ouvre dans une partie en retrait (56) qui est en retrait par rapport à la paroi externe (55) du contenant d'épurateur (45), la partie de tuyau double (52) est logée dans la partie en retrait (56), et un capot de conduit (57) est monté sur le contenant d'épurateur (45), le capot de conduit (57) bloquant la partie en retrait (56) à une position faisant face à l'extrémité amont du conduit d'admission (46).

6. Épurateur d'air (101) pour alimenter en air extérieur un moteur à combustion interne, comprenant
un contenant d'épurateur (102) qui forme une chambre sale (111a) communiquant avec l'air extérieur et une chambre propre (111b) communiquant avec un tube de raccordement (104) qui mène au moteur à combustion interne, qui est une destination d'alimentation pour de l'air purifié,
un élément d'épurateur (108) qui est disposé au sein du contenant d'épurateur (102) entre la chambre sale (111a) et la chambre propre (111b), et
un conduit d'admission (103) qui est fixé au contenant d'épurateur (102) et fournit une communication entre la chambre sale (111a) et un espace d'air extérieur,
dans lequel l'épurateur d'air (101) comprend une paroi de support (105) qui est continue à partir d'une face de paroi externe du conduit d'admission (103), s'étend vers l'extérieur, et est fixée au contenant d'épurateur (102),
une partie de tuyau double (112) qui est continue à partir de la paroi de support (105) et encercle une extrémité amont du conduit d'admission (103) le long d'une périphérie externe du conduit d'admission (103), et
un organe intérieur (118) relié au tube de raccordement (104) est prévu dans la chambre propre (111b), **caractérisé en ce que**
une autre partie de tuyau double (127) est prévue à une extrémité amont de l'organe intérieur (118).

7. Épurateur d'air selon la revendication 6, dans lequel une distance (DF) entre une face de paroi externe du conduit d'admission (103) et la partie de tuyau double (112) est définie pour être de 10 % à 30 % d'une distance (DP) d'une paroi interne du conduit d'admission (103).

8. Épurateur d'air selon la revendication 6 ou 7, dans lequel une extrémité amont de la partie de tuyau double (112) est en contact avec un plan virtuel (PL) sur lequel se trouve l'extrémité amont du conduit d'admission (103), ou la partie de tuyau double (112) fait intersection avec le plan virtuel (PL).
